(19) Europäisches Patentamt
European Patent Office
Office européen des brevets

(11) EP 1 909 400 B1

(12) **EUROPEAN PATENT SPECIFICATION**

(45) Date of publication and mention
of the grant of the patent:
**08.12.2010 Bulletin 2010/49**

(51) Int Cl.:
***H04B 1/10*** (2006.01)

(21) Application number: **06425686.0**

(22) Date of filing: **06.10.2006**

(54) **Detection and suppression of adjacent channel interference in a received signal through the use of the Teager-Kaiser function**

Detektion und Unterdrückung von Nachbarkanalinterferenzen in einem empfanganen Signal durch die Nutzung der Teager-Kaiser Funktion

Détection et suppression de l'interférence due au canal adjacent dans un signal reçu par moyen de la fonction Teager-Kaiser

(84) Designated Contracting States:
**DE FR GB IT**

(43) Date of publication of application:
**09.04.2008 Bulletin 2008/15**

(73) Proprietor: **STMicroelectronics Srl**
**20041 Agrate Brianza (MB) (IT)**

(72) Inventor: **Adduci, Francesco c/o**
**STMicroelectronics S.r.l.**
**20041 Agrate Brianza (MB) (IT)**

(74) Representative: **Perani, Aurelio et al**
**Perani Mezzanotte & Partners**
**Piazza San Babila, 5**
**20122 Milano (IT)**

(56) References cited:
**EP-A- 0 939 496        WO-A1-03/039012**

• **BALASUBRAMANIAM SANTHANAM ET AL: "Multicomponent AM-FM Demodulation via Periodicity-Based Algebraic Separation and Energy-Based Demodulation" IEEE TRANSACTIONS ON COMMUNICATIONS, IEEE SERVICE CENTER, PISCATAWAY, NJ, US, vol. 48, no. 3, March 2000 (2000-03), pages 473-490, XP011010807 ISSN: 0090-6778**

• **BALU SANTHANAM: "Multicomponent AM--FM Energy Demodulation with Applications to Signal Processing and Communications."[Online] 1 November 1997 (1997-11-01), pages 1-165, XP002423027 Retrieved from the Internet: URL: http://web.archive.org/web/20050106001 141/http://www.eece.unm.edu/faculty/bsanth an/ > [retrieved on 2007-03-02]**

• **LIPSEY M J ET AL: "On the Teager-Kaiser energy operator low frequency error" THE 2002 45TH. MIDWEST SYMPOSIUM ON CIRCUITS AND SYSTEMS. CONFERENCE PROCEEDINGS. TULSA, OK, AUG. 4 - 7, 2002, MIDWEST SYMPOSIUM ON CIRCUITS AND SYSTEMS, NEW YORK, NY : IEEE, US, vol. VOL. 1 OF 3, 4 August 2002 (2002-08-04), pages 53-56, XP010635495 ISBN: 0-7803-7523-8**

• **MARAGOS P ET AL: "ENERGY SEPARATION IN SIGNAL MODULATIONS WITH APPLICATION TO SPEECH ANALYSIS" IEEE TRANSACTIONS ON SIGNAL PROCESSING, IEEE SERVICE CENTER, NEW YORK, NY, US, vol. 41, no. 10, 1 October 1993 (1993-10-01), pages 3024-3051, XP000404067 ISSN: 1053-587X**

**Description**

The present invention refers to a method and an apparatus for detecting adjacent channel interference in a modulated digital signal.

The present invention moreover refers to a method and apparatus for suppressing adjacent channel interference in a modulated digital signal.

The present invention also refers to a radio receiver using said apparatus.

The problem of adjacent channel interference in broadcast signals is known, particularly in AM/FM signals. Adjacent channel interference is due to the presence of channels with high field intensity adjacent to the selected channel which one wishes to receive. In the present case, the radio waves of the adjacent channel are found to interfere with the radio waves of the desired broadcast channel, causing disturbances and/or distortions in the reception of the desired channel signal by an AM/FM radio receiver.

At the state of the art, various methods and apparatuses are known for detecting and reducing/suppressing the adjacent channel interference in a broadcast AM/FM signal.

In FM mode, the prior art provides the analysis of the radio signal in complex notation, centred on an intermediate frequency IF; the greater the detected displacement of the oscillation frequency of the carrier signal component, the greater the interference contribution of the undesired adjacent FM channel within the desired FM channel.

In the case of a signal of AM type, a prior art example provides, as in the case of an FM signal, the analysis of the broadcast signal DSB with dual side bands, it too centred on the intermediate frequency IF and a subsequent choice of the "cleanest" side band for the demodulation of the AM signal.

Other techniques require high performance hardware circuitry with a consequent increase in the costs of the apparatus for detecting and suppressing the adjacent channel interference, and consequently, in the overall cost of the AM/FM radio receiver in which such apparatus is incorporated.

Examples of additional techniques for detecting and reducing or suppressing the adjacent channel interference are described in the documents US-6,430,724, US-2003/0207669 , WO-2004/047322 and WO 03/039012.

Such documents describe methods and apparatuses which require numerous circuit components and complex processing algorithms for detecting and suppressing the adjacent channel interference in the received signal. Moreover, the methods and apparatuses herein described require a conversion of the received signal from the frequency of the selected carrier to an intermediate frequency IF, and hence the use of external mixers and filters for the intermediate frequency whose cost substantially impacts on the overall cost of the receiver.

In view of the described state of the art, object of the present invention is that of providing a method and an apparatus for detecting adjacent channel interference in a modulated digital signal capable of overcoming the drawbacks present in the prior art.

A further object is that of providing a method and apparatus for suppressing adjacent channel interference.

Due to the present invention, it is possible to obtain a method and an apparatus capable of detecting the adjacent channel interference in a modulated digital signal by using a simpler technique with respect to those employed at the state of the art, and suppressing or at least greatly reducing such adjacent channel interference in the modulated digital signal.

Moreover, it is possible to obtain an apparatus capable of detecting and suppressing or at least greatly reducing the adjacent channel interference in a modulated digital signal.

A further advantageous aspect of the present invention is that of obtaining a radio receiver equipped with the apparatus for detecting and suppressing or reducing the adjacent channel interference whose production and achievement cost is considerably less than that of radio receivers of the prior art.

Further characteristics and advantages of the method and apparatus according to the present invention will be clearer from the below description of a preferred embodiment, given as indicative and non-limiting with reference to the attached figures, in which:

- Figures 1, 2 and 3 show different explanatory schematic diagrams of the method for detecting and suppressing the adjacent channel interference in a modulated digital signal in accordance with the present invention,
- Figure 4 shows a schematic block diagram of a receiver provided with an apparatus for detecting and reducing/ suppressing the adjacent channel interference in a modulated digital signal in accordance with the present invention,
- Figure 5 shows a block diagram of a possible embodiment of a circuit of the apparatus made in the receiver illustrated in figure 4.

In the course of the present description, use will be made of the non-linear Teager-Kaiser operator or function, described for example in the document "On a Simple Algorithm to Calculate the Energy of a Signal" by James F. Kaiser, PROC. ICASSP, Vol. S7.3, pps. 381-384, 1990, incorporated here for reference.

The non-linear Teager-Kaiser $\Psi$ operator determines the "energy" of a signal. In other words, such algorithm produces as result a value which was demonstrated to be directly correlated to the "energy" of the signal being analysed.

The definition of non-linear Teager-Kaiser operator is illustrated here below, so to make the subsequent description of the invention clearer.

The non-linear Teager-Kaiser operator is defined by the following relation (1):

$$\Psi_c\left[x(n\cdot T)\right] = \left(\frac{\partial}{\partial(n\cdot T)}x(n\cdot T)\right)^2 - x(n\cdot T)\cdot\left(\frac{\partial^2}{\partial(n\cdot T)^2}x(n\cdot T)\right)$$

Using the general property of the derivatives in the discrete domain and keeping the coherence between the samples with the primitive function and its derivatives, it is possible to obtain, removing the notion of the time T, that:

$$\overset{\circ}{x}(n) = \frac{x(n+1) - x(n-1)}{2}$$

or

$$\overset{\circ}{x}(n) = x(n+1) - x(n)$$

and

$$\overset{\circ\circ}{x}(n) = x(n+1) + x(n-1) - 2\cdot x(n)$$

so that (1) can be rewritten in more compact notation

$$\Psi\left[x(n)\right] = \left[x(n+1) - x(n)\right]^2 - x(n+1)\cdot\left[x(n+1) + x(n-1) - 2\cdot x(n)\right] \qquad (2)$$

or

$$\Psi\left[x(n)\right] = \left[x(n)\right]^2 - x(n+1)\cdot x(n-1) \qquad (3).$$

It should be pointed out that the digital signal x(n), derived from the corresponding analog signal x(t), is an ideal signal, free of adjacent channel interference.

Nevertheless, in a real communication system, noise or adjacent channel interference can be present, such interference being capable of degrading the information content of the received signal and reducing its quality. Such analog signal affected by adjacent channel interference will be indicated below in the present description with the s(t) notation, as the s(n) notation will indicate the corresponding digital signal.

As is known, a receiver, for example a car radio receiver, is capable of receiving a radio frequency modulated analog signal s(t), which can be an AM modulated signal or an FM modulated signal, filtering it and converting it into a digital signal s(n) by means of analog-digital converter means having a sampling frequency $f_s$, processing such digital signal in order to demodulate the received modulated signal s(t). If the adjacent channel interference, present in the modulated analog signal s(t), and hence in the corresponding modulated digital signal s(n), is particularly high, such interference is capable of degrading the quality of the output audio signal to an unacceptable level.

With reference to the attached figures, the method for detecting the adjacent channel interference in a modulated digital signal s(n) comprises the steps of:

a) providing at least one first value of a characteristic parameter of the digital signal s(n), in the example the value $a_j(n)$, if the signal s(n) is an FM signal, and the value $\Omega_c$, if the signal s(n) is an AM signal, such first value being representative of the modulated digital signal s(n) free of adjacent channel interference,

b) providing at least one second value of such characteristic parameter of the digital signal s(n), in the example the value a(n) if the signal s(n) is an FM signal and the value $\hat{\Omega}_c$ is the signal s(n) is an AM signal, such second value being representative of the modulated digital signal s(n) affected by adjacent channel interference, and

c) comparing the first value $a_j(n)$, $\Omega_c$ with the second value $a(n)$, $\hat{\Omega}_c$ so to detect the adjacent channel interference in the modulated digital signal s(n).

In particular, the step b) comprises the steps:

b1) processing the digital signal s(n) for obtaining a derivative signal s'(n) representative of the derivative of the digital signal s(n),

b2) applying a non-linear Teager-Kaiser function $\Psi$ to the digital signal s(n) for generating a first signal $\Psi[s(n)]$ representative of the energy content of the digital signal s(n),

b3) applying the non-linear Teager-Kaiser function $\Psi$ to the derivative signal s'(n) for generating a second signal $\Psi[s'(n)]$ representative of the energy content of the derivative signal s'(n), and

b4) processing the first signal $\Psi[s(n)]$ and the second signal $\Psi[s'(n)]$ for generating the second value $a(n)$, $\hat{\Omega}_c$.

Advantageously, the step c) of comparing the first value $a_j(n)$, $\Omega_c$ and the second value $a(n)$, $\hat{\Omega}_c$ comprises the step of generating a value able to detect the adjacent channel interference in the modulated digital signal s(n).

In accordance with a preferred embodiment, the comparison step c) comprises the step of calculating the ratio

$$\frac{a(n)}{a_i(n)}, \frac{\hat{\Omega}_c}{\Omega_c}$$ between the second value $a(n)$, $\hat{\Omega}_c$ and the first value $a_j(n)$, $\Omega_c$. The adjacent channel interference in the modulated digital signal s(n) is detected when the value of the calculated ratio $\dfrac{a(n)}{a_i(n)}, \dfrac{\hat{\Omega}_c}{\Omega_c}$ is different from 1.

In particular, in the case of FM type signal s(n), the adjacent channel interference in the modulated digital signal s(n) is detected when the calculated value of the ratio $\dfrac{a(n)}{a_j(n)}$ is greater than 1, while in the case of the AM type signal s(n), the calculated value of the ratio $\dfrac{\hat{\Omega}_c}{\Omega_c}$ can either be greater or less than 1 in the presence of adjacent channel interference in the modulated digital signal s(n).

## ADJACENT CHANNEL INTERFERENCE IN FM

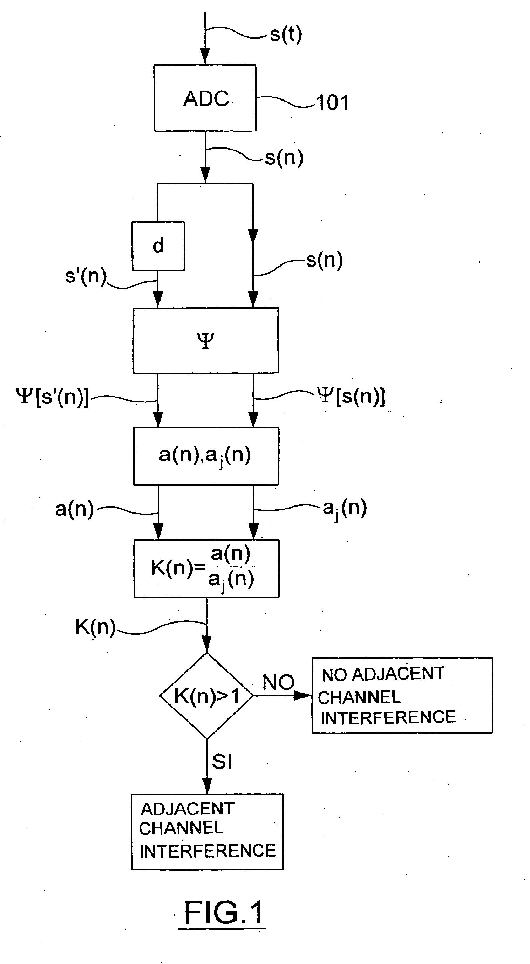

With reference to figure 1, the application of the method according to the invention is described below for detecting the adjacent channel interference in a modulated digital signal s(n) of FM type, received on a predetermined channel frequency value $\Omega_c/2\pi$, or rather channel angular frequency value $\Omega_c$. The FM modulated digital signal s(n) is composed of a modulating signal and a carrier signal and is represented by a series of samples.

In the case of FM signal, the aforesaid characteristic parameter is a carrier signal amplitude value.

The FM modulated digital signal s(n) has a predefined frequency deviation $f_m$.

According to one aspect of the invention, the method comprises a step of set a first value of filtering bandwidth $f_j$ less than the value of the predefined frequency deviation $f_m$, and a second filtering bandwidth value $f_f$ comprised between the first filtering bandwidth value $f_j$ and the value of the predefined frequency deviation $f_m$, for generating the first amplitude value $a_j(n)$ of the carrier signal representative of the digital signal s(n) free of adjacent channel interference and the second amplitude value a(n) of the carrier signal representative of the digital signal s(n) affected by adjacent channel interference.

As outlined above, the modulated digital signal s(n) is obtained by the analog-digital conversion of the modulated analog signal s(t).

The step a) of the method therefore comprises the steps of:

a1) filtering the analog signal s(t), with a filtering angular frequency centred on the predetermined channel angular frequency $\Omega_c$ and with a passband equal to the value of the first filtering band $f_j$, for generating, by analog-digital conversion, a first filtered digital signal $s_j(n)$,

a2) carrying out the steps from b1) to b4), where the digital signal s(n) is substituted with the first filtered digital signal $s_j(n)$, for generating the first amplitude value $a_j(n)$ of the carrier signal of the first filtered digital signal $s_j(n)$, representative of the digital signal s(n) free of adjacent channel interference.

For simplicity, the references to the signals generated after the filtering step are omitted, since such filtered analog signals are subsequently converted into filtered digital signals which are used by the method according the invention.

In substance, step a2), where the analog signal s(n) is substituted with a first filtered digital signal $s_j(n)$, comprises the steps of:

- processing the first filtered digital signal ($s_j(n)$) to obtain a derivative signal $s'_j(n) = \dfrac{s_j(n+1) - s_j(n-1)}{2}$,

- applying the non-linear Teager-Kaiser function $\Psi$ to the first filtered digital signal $s_j(n)$ for generating a first signal $\Psi_j[s_j(n)]$ representative of the energy content of the first filtered digital signal $s_j(n)$,

- applying the non-linear Teager-Kaiser function $\Psi$ to the derivative signal $s_j'(n)$ for generating a second signal $\Psi_j[s_j'(n)]$ representative of the energy content of the derivative signal $s_j'(n)$, and

- processing the first signal $\Psi_j[s_j(n)]$ and the second signal $\Psi_j[s_j'(n)]$ for generating the first amplitude value $a_j(n)$ according to the formula (4):

$$a_j(n) \cong \frac{2 \cdot \Psi_j\left[s_j(n)\right]}{\sqrt{\Psi_j\left[s_j(n+1) - s_j(n-1)\right]}}$$

It should be pointed out that the derivative signal $s'_j(n) = \dfrac{s_j(n+1) - s_j(n-1)}{2}$ is obtained by applying the symmetric difference algorithm. Alternatively, one can apply the backward difference algorithm for which $s_j'(n) = s_j(n+1) - s_j(n)$.

The step b) comprises the steps of:

- filtering the analog signal s(t), with a filtering angular frequency centred on a predetermined channel angular frequency value $\Omega_c$ and with a passband equal to the second filtering band $f_f$, for generating, by the analog-digital conversion step, a second filtered digital signal $s_f(n)$, and

- carrying out the steps from b1) to b4), where the digital signal s(n) is substituted with the second filtered digital signal $s_f(n)$, for generating the second amplitude value (a(n)) of the carrier signal of the second filtered digital signal $s_f(n)$, representative of the digital signal s(n) affected by adjacent channel interference.

In substance, the aforesaid step of carrying out the steps from b1) to b4), where the digital signal s(n) is substituted with a second filtered digital signal $s_f(n)$, comprises the steps of:

- processing the second filtered digital signal ($s_f(n)$) to obtain a derivative signal

$$s'_f(n) = \frac{s_f(n+1) - s_f(n-1)}{2},$$

- applying the non-linear Teager-Kaiser function $\Psi$ to the second filtered digital signal $s_f(n)$ for generating a first signal $\Psi_f[s_f(n)]$ representative of the energy content of the second filtered digital signal $s_f(n)$,

- applying the non-linear Teager-Kaiser function $\Psi$ to the derivative signal $s_f'(n)$ for generating a second signal $\Psi_f[s_f'(n)]$ representative of the energy content of the derivative signal $s_f'(n)$, and

- processing the first signal $\Psi_f[s_f(n)]$ and the second signal $\Psi_f[s_f{}'(n)]$ for generating the second amplitude value $a_f(n)$ according to the formula (5):

$$a(n) \cong \frac{2 \cdot \Psi_f\left[s_f(n)\right]}{\sqrt{\Psi_f\left[s_f(n+1) - s_f(n-1)\right]}}$$

Finally, the step c) comprises the step of calculating the value $\kappa(n)$ of the ratio $\dfrac{a(n)}{a_j(n)}$ between the second amplitude value a(n) and the first amplitude value $a_j(n)$.

In particular, the comparison step c) comprises the step of comparing the calculated value $\kappa(n)$ of the ratio $\dfrac{a(n)}{a_j(n)}$ with a predetermined threshold value $\kappa_{th}(n)$.

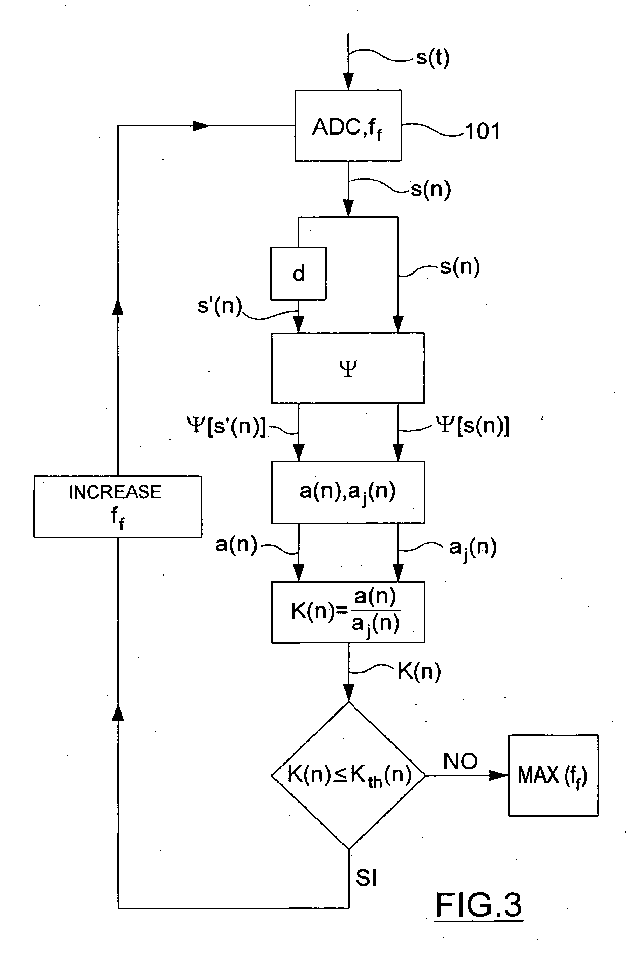

With reference to figure 3, in order to reduce or suppress the adjacent channel interference detected in the signal s(n), the method comprises the steps of:

    d) increasing, by a predetermined amount, for example $\pm$ 7.5 KHz, the second filtering bandwidth value $f_f$, and
    e) recursively repeating steps b), c) and d) for the respective second increased filtering bandwidth value $f_f$, until the corresponding calculated ratio value $\kappa(n)$ is less than or equal to the threshold value $\kappa_{th}(n)$, where each second filtering bandwidth value $f_f$ represents a filtering bandwidth value able to reduce/suppress the adjacent channel interference in the modulated digital signal s(n).

The method also provides the step of

    f) obtaining the greatest second filtering bandwidth value $f_f$ for which the calculated ratio value $\kappa(n)$ is less than or equal to the threshold value $\kappa_{th}(n)$, when the calculated ratio value $\kappa(n)$ becomes greater than the threshold value $\kappa_{th}(n)$. Such greatest second filtering bandwidth value $f_f$ representing the optimal filtering bandwidth value able to reduce/suppress the adjacent channel interference in the modulated digital signal s(n). The values of second filtering bandwidth value $f_f$ less than the greatest second filtering bandwidth value $f_f$ represent values that are still good for reducing/suppressing the adjacent channel interference in the modulated digital signal s(n).

To suppress or at least greatly reduce the adjacent channel interference in the FM modulated digital signal s(n) received on the predetermined channel angular frequency value $\Omega_c$, the method comprises the steps of:

- detecting the adjacent channel interference in the digital signal s(n) to obtain the greatest second filtering bandwidth value $f_f$ for which the calculated ratio value $\kappa(n)$ is less than the threshold value $\kappa_{th}(n)$, and
- filtering the analog signal s(t) with a filtering angular frequency centred on the predetermined channel angular frequency value $\Omega_c$ and with a passband equal to the value of the greatest obtained second filtering bandwidth value $f_f$, for generating, by the analog-digital conversion, a filtered digital signal substantially free of adjacent channel interference or with reduced adjacent channel interference.
Below, a specific application example is described of the method of the invention in which the signal s(n), affected by adjacent channel interference, is composed of a signal $x_C(n)$ present in the desired channel $\Omega_c$ and representative of the signal s(n) free of adjacent channel interference, a signal $x_L(n)$ present to the left, in the frequency axis, of the desired channel, and a signal $x_R(n)$ present to the right of the desired channel, where $x_L(n)$ and $x_R(n)$ represent the signals of the channels $\Omega_{cL}$ and $\Omega_{cR}$ adjacent to the signal $x_C(n)$ of the desired channel $\Omega_c$, in which

$$\dot{x}_C(n) = a_C(n) \cdot \cos\left(\Omega_c \cdot n + \Omega_m \cdot \int_0^n q_C(v) \cdot dv + \phi_C\right) \quad (6)$$

$$x_L(n) = a_L(n) \cdot \cos\left(\Omega_{cL} \cdot n + \Omega_{mL} \cdot \int_0^n q_L(v) \cdot dv + \phi_L\right) \quad (7)$$

$$x_R(n) = a_R(n) \cdot \cos\left(\Omega_{cR} \cdot n + \Omega_{mR} \cdot \int_0^n q_R(v) \cdot dv + \phi_R\right) \quad (8)$$

in which

the terms a(n) in (6), (7) and (8) represent the component of FM carrier signal, $\vartheta(n) = \Omega_c + \Omega_m \cdot q(n)$ represents the instantaneous angular frequency, and
q(n) the component of FM modulating signal where

$$|q(n)| \leq 1 \ \forall n \in \{I \geq 0\} \ \ 0 \leq \Omega_c \pm \Omega_m \leq \pi,$$

$\Omega_c$ the angular frequency of oscillation of the channel carrier signal,
$\Omega_m$ the angular deviation frequency of the modulating signal,
with the correct substitutions of subscripts for the signals $x_C(n)$, $x_L(n)$ and $x_R(n)$, not shown for the sake of brevity.
The received signal s(n) is therefore the sum of $x_C(n)$, $x_L(n)$ and $x_R(n)$. Applying the non-linear Teager Kaiser function to the received signal s(n), one obtains:

$$\Psi_F[s(n)] = \Psi_F\left[x_C(n) + x_L(n) + x_R(n)\right] = \Psi_F\left[x_C(n)\right] +$$

$$\Psi_F\left[x_L(n) + x_R(n)\right] + 2 \cdot \Psi_F\left[x_C(n), x_L(n) + x_R(n)\right] \approx$$

$$\approx \Psi_F\left[x_C(n)\right] + \Psi_F\left[x_L(n) + x_R(n)\right] \quad (9),$$

where $\Psi_F[x_C(n), x_L(n) + x_R(n)]$ was placed equal to zero since $x_C(n)$ is correlated neither with $x_L(n)$ nor with $x_R(n)$ or with any other combination of $x_L(n)$ and $x_R(n)$, including the derivatives. From this, it derives that

$$\Psi_F[s(n)] = \Psi_F\left[x_C(n) + x_L(n) + x_R(n)\right] \approx$$

$$\approx \Psi_F\left[x_C(n)\right] + \Psi_F\left[x_L(n)\right] + \Psi_F\left[x_R(n)\right] \cong$$

$$\cong a_C^2(n) \cdot \sin^2\left[\Omega_c + \Omega_m \cdot q(n)\right] +$$

$$+ a_L^2(n) \cdot \sin^2\left[\Omega_{cL} + \Omega_{mL} \cdot q_L(n)\right] + a_R^2(n) \cdot \sin^2\left[\Omega_{cR} + \Omega_{mR} \cdot q_R(n)\right] \quad (10),$$

and that

$$\Psi_F\left[s'(n)\right] = \Psi_F\left[\frac{\partial}{\partial n}\langle x_C(n) + x_L(n) + x_R(n)\rangle\right] \approx$$

$$\approx \Psi_F\left[\frac{\partial}{\partial n}x_C(n)\right] + \Psi_F\left[\frac{\partial}{\partial n}x_L(n)\right] + \Psi_F\left[\frac{\partial}{\partial n}x_R(n)\right] \cong$$

$$\cong a_C^2(n)\cdot\sin^4\left[\Omega_c + \Omega_m\cdot q(n)\right] +$$

$$+ a_L^2(n)\cdot\sin^4\left[\Omega_{cL} + \Omega_{mL}\cdot q_L(n)\right] + a_R^2(n)\cdot\sin^4\left[\Omega_{cR} + \Omega_{mR}\cdot q_R(n)\right] \quad (11),$$

where s'(n) is the derivative signal representative of the derivative of the digital signal s(n) and $\Psi_F$ represents the filtered version of the function $\Psi$ applied to a signal in the band of the FM signals. In other words, $\Psi_F$ represents the signal resulting from the transformation by means of the Teager-Kaiser $\Psi$ function and subsequently filtered.

In the case of signal $x(n) = a(n)\cdot\cos\left(\Omega_c\cdot n + \Omega_m\cdot\int_0^n q(v)\cdot dv + \phi\right),$ by applying the symmetric difference algorithm for which

$$\Psi[x'(n)] = \Psi[\frac{x(n+1) - x(n-1)}{2}] \qquad (12)$$

one obtains:

$$\Psi\left[x(n+1) - x(n-1)\right] \approx 4\cdot a^2(n)\cdot\sin^4\left[\Omega_c + \Omega_m\cdot q(n)\right] \qquad (13),$$

from which one has:

$$q(n)\cdot\Omega_m \cong \frac{1}{2}\cdot\arccos\left(1 - \frac{\Psi_F\left[x(n+1) - x(n-1)\right]}{2\cdot\Psi_F\left[x(n)\right]}\right) - \Omega_c \qquad (14).$$

It can therefore be demonstrated that the modulating signal is given by the relation:

$$\Omega_{mj}\cdot q_j(n) \cong \frac{1}{2}\cdot\arccos\left[1 - \eta(n) + \eta(n)\cdot\cos\left(2\cdot\Omega_{cj} + 2\cdot\Omega_{mj}\cdot q_j(n)\right)\right] - \Omega_{cj} \qquad (15)$$

where

$$\eta(n) = \frac{1 + \sum_{k=1}^{2}\frac{a_k^2(n)}{a_j^2(n)}\cdot\frac{\sin^4\left(\Omega_{ck} + \Omega_{mk}\cdot q_k(n)\right)}{\sin^4\left(\Omega_{cj} + \Omega_{mj}\cdot q_j(n)\right)}}{1 + \sum_{k=1}^{2}\frac{a_k^2(n)}{a_j^2(n)}\cdot\frac{\sin^2\left(\Omega_{ck} + \Omega_{mk}\cdot q_k(n)\right)}{\sin^2\left(\Omega_{cj} + \Omega_{mj}\cdot q_j(n)\right)}} \approx 1 \qquad (16).$$

in which the j index indicates one of the three signals $x_C(n)$, $x_L(n)$ and $x_R(n)$, or rather the signal of the desired channel $x_C(n)$ and the two signals of the adjacent channels $x_L(n)$ and $x_R(n)$, and the summation $\Sigma$ is executed on the remaining two signals.

From this it is inferred that a correct demodulation of the signal s(n), sum of the signals $x_C(n)$, $x_L(n)$ and $x_R(n)$ having respective channel angular frequency values $\Omega_c$, $\Omega_{cL}$ and $Q_{cR}$ very close to each other, cannot be obtained without a good selectivity of the desired FM channel.

In particular, the desired channel identified with the j index can be correctly demodulated if and only if the ratio values $\dfrac{a_k^2(n)}{a_j^2(n)}$ are sufficiently small.

Applying the expression (12) to the received signal s(n) affected by adjacent channel interference and hence the sum of the signals $x_C(n)$, $x_L(n)$ and $x_R(n)$, one obtains that

$$(17) \qquad a(n) \cong \frac{2 \cdot \Psi_F\left[s(n)\right]}{\sqrt{\Psi_F\left[s(n+1) - s(n-1)\right]}} =$$

$$(18) \qquad = a_j(n) \cdot \frac{1 + \sum\limits_{k=1}^{2} \dfrac{a_k^2(n)}{a_j^2(n)} \cdot \dfrac{\sin^2\left(\Omega_{ck} + \Omega_{mk} \cdot q_k(n)\right)}{\sin^2\left(\Omega_{cj} + \Omega_{mj} \cdot q_j(n)\right)}}{\sqrt{1 + \sum\limits_{k=1}^{2} \dfrac{a_k^2(n)}{a_j^2(n)} \cdot \dfrac{\sin^4\left(\Omega_{ck} + \Omega_{mk} \cdot q_k(n)\right)}{\sin^4\left(\Omega_{cj} + \Omega_{mj} \cdot q_j(n)\right)}}} \approx$$

$$(19) \qquad \approx a_j(n) \cdot \sqrt{1 + \sum\limits_{k=1}^{2} \frac{a_k^2(n)}{a_j^2(n)}}$$

Where a(n) is the amplitude of the carrier signal of the received signal s(n) affected by adjacent channel interference.

After having set a central filtering angular frequency equal to the channel angular frequency which one wishes to receive, in the example equal to the predetermined channel angular frequency value $\Omega_c$ of the signal $x_C(n)$, the value of a(n) was obtained by initially filtering the analog signal s(t) with a narrow angular passband centred on such channel angular frequency $\Omega_c$, such that the value a(n) substantially corresponds to the value $a_j(n)$ of the amplitude of the carrier signal of the digital signal s(n) free of adjacent channel interference, that is substantially the single signal $x_C(n)$.

Subsequently, the value of a(n) is evaluated by increasing the value of the filtering passband of the analog signal s(t), for example with passes of $\pm$ 7.5 KHz, up to a predefined maximum value, for example $\pm$ 160 KHz to determine a sequence of values:

$$\kappa(n) = \frac{a(n)}{a_j(n)} \cong \sqrt{1 + \sum\limits_{k=1}^{2} \frac{a_k^2(n)}{a_j^2(n)}} \qquad\qquad (20).$$

where the value a(n) corresponds to the value a(n) for a digital signal s(n) affected by adjacent channel interference, that is with a channel contribution of at least one of the signals $x_L(n)$ and $x_R(n)$.

The choice of the optimal filtering band for reducing/suppressing the adjacent channel interference can be set, for example, for values of $\kappa(n) \le \kappa_{th}(n)$, where $\kappa_{th}(n)$ is a limit threshold equal, for example, to 1.005 if the reduction of the adjacent channel must be achieved for adjacent stations $x_L(n)$, $x_R(n)$ which have angular frequency components greater than 20dB with respect to the desired signal $x_C(n)$ of the desired angular band $\Omega_c$.

It should be pointed out that the threshold value $\kappa_{th}(n)$ can be set in relation with the intensity of the desired field.

**ADJACENT CHANNEL INTERFERENCE IN AM**

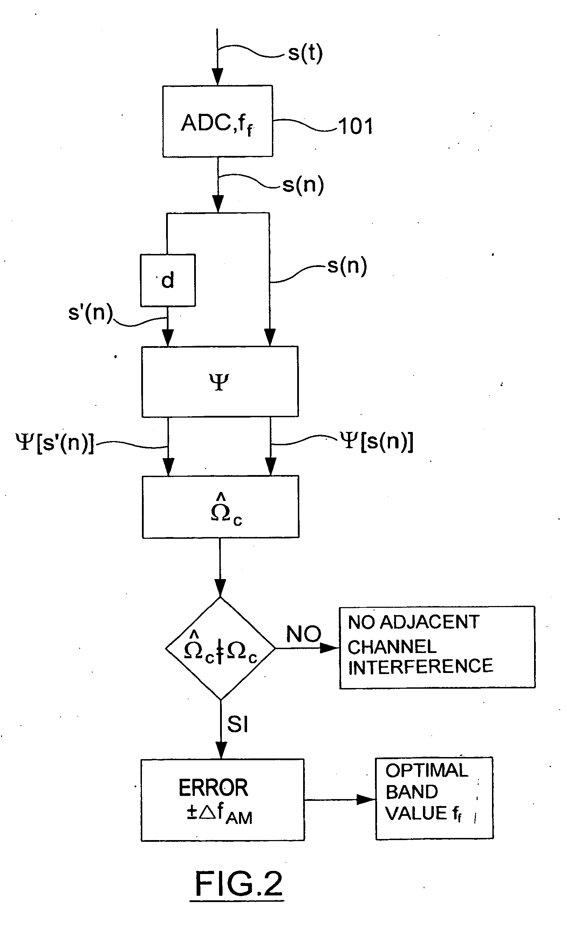

With reference to figure 2, the application is described of the method according to the invention for detecting and suppressing the adjacent channel interference in a modulated digital signal s(n) of AM type received on a predetermined channel carrier angular frequency value, for simplicity named $\Omega_c$ but evidently different from the channel angular frequency value $\Omega_c$ mentioned with reference to the treatment for the FM signal.

The AM modulated digital signal s(n) is composed of a modulating signal and a carrier signal oscillating at a channel carrier angular frequency $\hat{\Omega}_c$ and is represented by a series of channels.

In the AM signal case, the aforesaid characteristic parameter being a value of channel carrier angular frequency.

In particular, step a) comprises the step of receiving, for example as value set by a user in an AM receiver, such predetermined channel carrier angular frequency value $\Omega_c$, representative of the digital signal s(n) free of adjacent channel interference, step b) generates the value of the channel carrier angular frequency $\hat{\Omega}_c$ representative of the digital signal s(n) affected by adjacent channel interference, and step c) comprises the step of calculating the ratio $\dfrac{\hat{\Omega}_c}{\Omega_c}$ between the generated channel carrier angular frequency value $\hat{\Omega}_c$ and the received channel carrier angular frequency value $\Omega_c$.

In particular, the step of generating the channel carrier angular frequency value $\hat{\Omega}_c$ comprises the steps of:

b1) processing the digital signal s(n) to obtain a derivative signal s'(n) representative of the derivative of the digital signal s(n),

b2) applying the non-linear Teager-Kaiser $\Psi$ function to the digital signal s(n) for generating a first signal $\Psi[s(n)]$ representative of the energy content of the digital signal s(n),

b3) applying the non-linear Teager-Kaiser $\Psi$ function to the derivative signal s'(n) for generating a second signal $\Psi[s'(n)]$ representative of the energy content of the derivative signal s'(n), and

b4) processing the first signal $\Psi[s(n)]$ and the second signal $\Psi[s'(n)]$ for generating the channel carrier angular frequency value $\hat{\Omega}_c$ by applying the following formula:

$$\hat{\Omega}_c \cong \frac{1}{2} \cdot \arccos\left(1 - \frac{\Psi_F\left[s(n+1) - s(n-1)\right]}{2 \cdot \Psi_F\left[s(n)\right]}\right).$$

The method moreover comprises the step of obtaining an optimal filtering bandwidth value able to reduce/suppress the adjacent channel interference in the modulated digital signal s(n), as a function of the result of the comparison step c) or rather as a function of the calculated value of the ratio $\dfrac{\hat{\Omega}_c}{\Omega_c}$ between the generated channel carrier angular frequency value $\hat{\Omega}_c$ and the received channel carrier angular frequency value $\Omega_c$.

A specific example is described below in which the signal s(n), affected by adjacent channel interference, is composed of a signal xc(n) present in the desired channel $\Omega_c$, of a signal $x_L(n)$ present to the left, in the frequency axis, of the desired channel and a signal $x_R(n)$ present to the right of the desired channel, where $x_L(n)$ and $x_R(n)$ represent the signals of channels adjacent to the signal x(n) on the desired channel, in which

$$x_C(n) = A_C \cdot \left(1 + m_C \cdot \sin\left(\Omega_a \cdot n\right)\right) \cdot \cos\left(\Omega_c \cdot n\right) \qquad (21)$$

$$x_L(n) = A_L \cdot \left(1 + m_L \cdot \sin\left(\Omega_{aL} \cdot n\right)\right) \cdot \cos\left(\Omega_{cL} \cdot n\right) \qquad (22)$$

$$x_R(n) = A_R \cdot \left(1 + m_R \cdot \sin\left(\Omega_{aR} \cdot n\right)\right) \cdot \cos\left(\Omega_{cR} \cdot n\right) \qquad (23)$$

where $A \cdot (1 + m \cdot \sin(\Omega_a \cdot n)) = a(n)$ represents the component of AM modulating signal of the respective signal $x_C(n)$, $x_L(n)$,

$x_R$(n) and $\Omega_c$ the carrier signal angular frequency with the correct subscript substitutions.

The received signal s(n) is the sum of $x_C$(n), $x_L$(n) and $x_R$(n). Applying the non-linear Teager Kaiser function to the received signal (n), one obtains

$$\Psi_F\left[s(n)\right] = \Psi_F\left[x_C\left(n\right)+x_L\left(n\right)+x_R\left(n\right)\right] = \Psi_F\left[x_C\left(n\right)\right]+$$

$$\Psi\left[x_L\left(n\right)+x_R\left(n\right)\right]+2\cdot\Psi\left[x_C\left(n\right),x_L\left(n\right)+x_R\left(n\right)\right]\approx$$

$$\approx\Psi\left[x_C\left(n\right)\right]+\Psi\left[x_L\left(n\right)+x_R\left(n\right)\right] \qquad (24),$$

where $\Psi[x_C(n),x_L(n)+x_R(n)]$ was set equal to zero since $x_C$(n) is correlated neither with $x_L$(n) nor with $x_R$(n), nor with any combination of $x_L$(n) and $x_R$(n), including the derivatives. From this one derives that

$$\Psi_F\left[x_C\left(n\right)+x_L\left(n\right)+x_R\left(n\right)\right]\approx$$

$$\approx\Psi_F\left[x_C\left(n\right)\right]+\Psi_F\left[x_L\left(n\right)\right]+\Psi_F\left[x_R\left(n\right)\right]\cong$$

$$\cong A^2\cdot\left(1+m\cdot\sin\left(\Omega_a\cdot n\right)\right)^2\cdot\sin^2\Omega_c+$$

$$+A_L^2\cdot\left(1+m_L\cdot\sin\left(\Omega_{aL}\cdot n\right)\right)^2\cdot\sin^2\Omega_{cL}+A_R^2\cdot\left(1+m_R\cdot\sin\left(\Omega_{aR}\cdot n\right)\right)^2\cdot\sin^2\Omega_{cR} \qquad (25),$$

and that

$$\Psi_F\left[s'(n)\right] = \Psi_F\left[\frac{\partial}{\partial n}\left\langle x_C\left(n\right)+x_L\left(n\right)+x_R\left(n\right)\right\rangle\right]\approx$$

$$\approx\Psi_F\left[\frac{\partial}{\partial n}x_C\left(n\right)\right]+\Psi_F\left[\frac{\partial}{\partial n}x_L\left(n\right)\right]+\Psi_F\left[\frac{\partial}{\partial n}x_R\left(n\right)\right]\cong$$

$$4A^2\cdot\left(1+m\cdot\sin\left(\Omega_a\cdot n\right)\right)^2\cdot\sin^4\Omega_c+$$

$$+4A_L^2\cdot\left(1+m_L\cdot\sin\left(\Omega_{aL}\cdot n\right)\right)^2\cdot\sin^4\Omega_{cL}+4A_R^2\cdot\left(1+m_R\cdot\sin\left(\Omega_{aR}\cdot n\right)\right)^2\cdot\sin^4\Omega_{cR} \qquad (26),$$

where s'(n) is a derivative signal representative of the derivative of the digital signal s(n) and $\Psi_F$ represents the function $\Psi$ applied to a filtered signal in the AM signal band.

In the case of a signal $x(n)=A\cdot(1+m\cdot\sin(\Omega_a\cdot n))\cdot\cos(\Omega_c\cdot n)$, by applying the symmetric difference algorithm, such that $\Psi[x'(n)] = \dfrac{\Psi[x(n+1)-x(n-1)]}{2}$ is obtained:

$$\Psi\left[x\left(n+1\right)-x\left(n-1\right)\right]\approx 4\cdot a^2\left(n\right)\cdot\sin^4\left[\Omega_c+\Omega_m\cdot q\left(n\right)\right] \qquad (27),$$

from which one has (28):

$$a(n) \cong \frac{2 \cdot \Psi\big[x(n)\big]}{\sqrt{\Psi\big[x(n+1)-x(n-1)\big]}}$$

It can therefore be demonstrated with that the modulating signal â$(n)$=Â·$(1+\hat{m}\cdot\sin(\hat{\Omega}_a\cdot n))$, in which the parameters with "Λ" represent the versions per signal s(n) affected by adjacent channel interference of the original parameters per signal x(n) free of adjacent channel interference, is given by the relation:

$$\hat{a}(n) = \frac{2 \cdot \Psi_F\big[s(n)\big]}{\sqrt{\Psi_F\big[s(n+1)-s(n-1)\big]}} \approx \Big[A \cdot \big(1 + m \cdot \sin(\Omega_a \cdot n)\big)\Big] \cdot \rho(n) \qquad (29)$$

where

$$s'(n) = \frac{s(n+1)-s(n-1)}{2}$$

and (30)

$$\rho(n) = \sqrt{1 + \sum_{k=1}^{2} \frac{A_k^2 \cdot \big(1 + m_k \cdot \sin(\Omega_k \cdot n)\big)^2}{A^2 \cdot \big(1 + m \cdot \sin(\Omega_a \cdot n)\big)^2}}$$

which must be minimised to be as close as possible to the value 1, reducing the band when the adjacent channel interference is detected in the signal s(n).

In the present case, the adjacent channel interference can be detected by measuring the oscillation frequency

$\hat{f}_c \underset{=}{\Delta} \dfrac{\hat{\Omega}_c \cdot f_s}{2 \cdot \pi}$ of the carrier signal which, in the absence of adjacent channel interference, must be equal to that set by the user in reception or rather equal to the predetermined channel angular frequency value $\Omega_c$, with

$$\hat{f}_c = \frac{\hat{\Omega}_c}{2 \cdot \pi} \qquad (31)$$

from which

$$\hat{f}_c = \frac{\hat{\Omega}_c}{2 \cdot \pi} = \frac{1}{4 \cdot \pi} \cdot \arccos\left\{1 - \frac{\Psi_F\big[s(n+1)-s(n-1)\big]}{2 \cdot \Psi_F\big[s(n)\big]}\right\} \qquad (32).$$

From the expression (32) one has that:

$$\hat{\Omega}_c \cong \frac{1}{2} \cdot \arccos\left(1 - \frac{\Psi_F[s(n+1)-s(n-1)]}{2 \cdot \Psi_F\big[s(n)\big]}\right) \approx \qquad (33)$$

$$\approx \frac{1}{2} \cdot \arccos\left(1 - 2 \cdot \sin^2 \Omega_c \cdot v^2(n)\right) \tag{34}$$

where

$$v(n) = \frac{1 + \sum\limits_{k=1}^{2} \dfrac{A_k^2 \cdot \left(1 + m_k \cdot \sin(\Omega_k \cdot n)\right)^2}{A^2 \cdot \left(1 + m \cdot \sin(\Omega_a \cdot n)\right)^2} \cdot \dfrac{\sin^4 \Omega_k}{\sin^4 \Omega_c}}{1 + \sum\limits_{k=1}^{2} \dfrac{A_k^2 \cdot \left(1 + m_k \cdot \sin(\Omega_k \cdot n)\right)^2}{A^2 \cdot \left(1 + m \cdot \sin(\Omega_a \cdot n)\right)^2} \cdot \dfrac{\sin^2 \Omega_k}{\sin^2 \Omega_c}}$$

If v(n)=1 then $\Omega_c = \hat{\Omega}_c$ or rather $f_c = \hat{f}_c$ and there is no adjacent channel interference; if instead v(n) $\neq$ 1 then $\Omega_c \neq \hat{\Omega}_c$ or

rather the ratio $\dfrac{\hat{\Omega}_c}{\Omega_c}$ is different from 1, or rather $f_c \neq \hat{f}_c$, and there is adjacent channel interference in the order of $\pm$

one pass of the tuning frequency, or $\pm 9KHz$ in the European AM transmission system and $\pm 10KHz$ in the American AM transmission system.

The choice of the filtering band of the signal s(t) is therefore carried out by set an appropriate threshold, which varies from producer to producer and which is a function of both the laws of the specific commercial area and the regulations of the producer company.

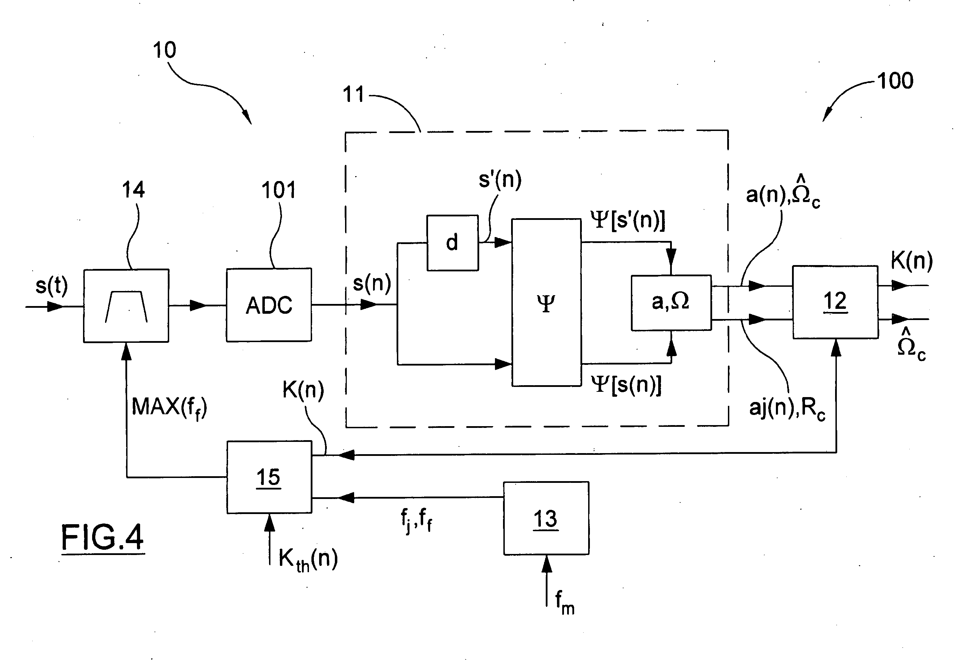

The present invention moreover regards an apparatus 10 for detecting the adjacent channel interference in the modulated digital signal s(n) (figure 4).

The apparatus 10 comprises processing means 11 able to

- receive the digital signal s(n) in input,
- provide at least one first value $a_j(n),\Omega_c$ of a characteristic parameter of the digital signal s(n), representative of the modulated digital signal free of adjacent channel interference, and
- provide at least one second value $a(n), \hat{\Omega}_c$ of the characteristic parameter of the digital signal s(n), representative of the modulated digital signal affected by adjacent channel interference.

In particular, to provide the second value $a(n),\hat{\Omega}_c$ of the characteristic parameter of the digital signal s(n), the processing means 11 are able to:

- process the digital signal s(n) to obtain a derivative signal s'(n) representative of the derivative of the digital signal s(n),
- apply the non-linear Teager-Kaiser function $\Psi$ to the digital signal s(n) for generating a first signal $\Psi[s(n)]$ representative of the energy content of the digital signal s(n),
- apply the non-linear Teager-Kaiser function $\Psi$ to the derivative signal s'(n) for generating a second signal $\Psi[s'(n)]$ representative of the energy content of the derivative signal s'(n), and
- process the first signal $\Psi[s(n)]$ and the second signal $\Psi[s'(n)]$ for generating the second value $a(n)$, $\hat{\Omega}_c$ of the characteristic parameter of the digital signal s(n), representative of the modulated digital signal affected by adjacent channel interference.

The processing means 11 can be implemented through hardware circuitry or a sequence of logic instructions or software.

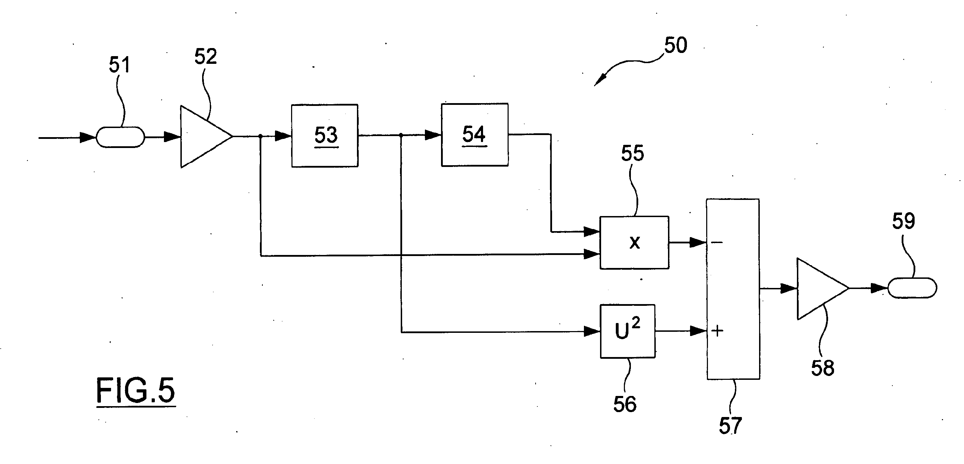

In accordance with one embodiment, the processing means 11 comprise a circuit 50 (figure 5), able to apply the non-linear Teager Kaiser function or operator to the signal s(n) for generating the signal $\Psi[s(n)] = [s(n)]^2 - s(n+1) \cdot s(n-1)$ representative of the energy content of the signal s(n). It should be pointed out that the same circuit 50 can be used for applying the Teager Kaiser function to any one signal entering the circuit 50.

The circuit 50 comprises an input 51 able to receive the signal s(n), preferably but not necessarily a pre-amplification stage 52 for amplifying the signal s(n), a first delay block 53 and a second delay block 54.

The first delay block 53 is connected to the input 51 and is able to delay a the input signal s(n) by one sample, while the second delay block 54 is input connected to the output of the first delay block 53 and is able to delay the signal output from the first delay block 53 by one sample.

The circuit 50 moreover comprises a multiplier 55 connected to the input 51 and to the output of the second delay block 54 to multiply the signal s(n) at the input 51 and the signal at the output of the second delay block 54, and a block 56 to execute the square of the signal output from the first delay block 53.

An adder block 57 is provided in the circuit 50 and has a first positive input connected with the output of the block 56 and a negative input connected to the output of the multiplier block 55.

Preferably, the circuit 50 comprises a post-amplification stage 58 for amplifying the signal output from the adder block 57.

Finally, the circuit 50 has an output 59 from which the output signal is drawn.

In the case in which, at the input 51 of the circuit 50, the sample s(n-1) of the signal s(n) is present, the signal at the output 59 is represented by the expression (3)

$$\left[s(n)\right]^2 - s(n+1) \cdot s(n-1)$$

or rather the Teager Kaiser $\Psi[s(n)]$ function of the signal x(n).

The apparatus 10 moreover comprises comparator means 12 coupled to the processing means 11 and able to compare the first value $a_j(n)$, $\Omega_c$ with the second value $a(n)$, $\hat{\Omega}_c$ to detect the adjacent channel interference in the modulated digital signal s(n).

Advantageously, the comparator means 12 are able for generating a value able to detect the adjacent channel interference in the modulated digital signal s(n).

In particular, the comparator means 12 are able to calculate the ratio $\dfrac{a(n)}{a_j(n)}, \dfrac{\hat{\Omega}_c}{\Omega_c}$ between the second value $a(n)$, $\hat{\Omega}_c$ and the first value $a_j(n), \Omega_c$), the adjacent channel interference in the modulated digital signal s(n) being detected when the value of the calculated ratio $\dfrac{a(n)}{a_j(n)}, \dfrac{\hat{\Omega}_c}{\Omega_c}$ is different from 1.

More in particular, the adjacent channel interference in the modulated digital signal (s(n)) is detected when the value of the calculated ratio $\dfrac{a(n)}{a_j(n)}$ is greater than 1 and when the value of the calculated ration $\dfrac{\hat{\Omega}_c}{\Omega_c}$ is greater or less than 1.

In the case in which the modulated digital signal s(n) is a FM signal received on a predetermined value of channel angular frequency $\Omega_c$, in which the FM digital signal is composed of a modulating signal and of a carrier signal and is represented by a series of samples, the processing means 11 of the apparatus 10 are able for generating a carrier signal amplitude value.

The FM modulated digital signal s(n) has a predefined frequency deviation $f_m$. The apparatus 10 comprises bandwidth value generator means 13 able to receive in input the value of the predefined frequency deviation $f_m$ for generating the first filtering bandwidth value $f_j$, less than the value of the predefined frequency deviation $f_m$, and the second filtering bandwidth value $f_f$, comprised between the first filtering bandwidth value $f_j$ and the value of the predefined frequency deviation $f_m$.

Advantageously, the apparatus 10 comprises analog-digital conversion means 101 able to receive the modulated analog signal s(t) so to convert such modulated analog signal s(t) into the modulated digital signal s(n) and band-pass filtering means 14 coupled to the conversion means 101, said band-pass filtering means 14 centred on the predetermined channel angular frequency value $\Omega_c$ and having a passband.

The apparatus 10 moreover comprises control means 15 coupled to the generator means 13 for setting the first filtering bandwidth value $f_j$ and the second filtering bandwidth value $f_f$ to the value of the passband of the filtering means 14.

The filtering means 14 are able to filter the analog signal s(t) and are coupled to the analog-digital conversion means 101 for generating a first filtered digital signal $s_j(n)$, when the control means 15 set the value of the passband equal to the first filtering bandwidth value $f_j$ and for generating a second filtered digital signal $s_f(n)$, when the control means 15 set the value of the passband equal to the second filtering bandwidth value $f_f$.

The processing means 11 are therefore able to process the first filtered digital signal $s_j(n)$ so for generating the first amplitude value $a_j(n)$ of the carrier signal of the first filtered digital signal $s_j(n)$, representative of the digital signal s(n) free of adjacent channel interference, and to process the second filtered digital signal $s_f(n)$ so for generating the second amplitude value $a_f(n)$ of the carrier signal of the second filtered digital signal $s_f(n)$, representative of the digital signal $s(n)$ affected by adjacent channel interference.

The comparator means 12 are able to calculate the value $\kappa(n)$ of the ratio $\dfrac{a(n)}{a_j(n)}$ between the second amplitude value $a(n)$ and the first amplitude value $a_j(n)$.

In accordance with one embodiment of the apparatus 10 according to the invention, still in the case of signal $s(n)$ of FM type, the processing means 11 are able to

- process the first filtered digital signal ($s_j(n)$) to obtain the derivative signal $s'_j(n) = \dfrac{s_j(n+1) - s_j(n-1)}{2}$,

- apply the non-linear Teager-Kaiser function $\Psi$ to the first filtered digital signal $s_j(n)$ for generating the first signal $\Psi_j[s_j(n)]$ representative of the energy content of the first filtered digital signal $s_j(n)$,

- apply the non-linear Teager-Kaiser function $\Psi$ to the derivative signal $s_j'(n)$ for generating the second signal $\Psi_j[s_j'(n)]$ representative of the energy content of the derivative signal $s_j'(n)$, and

- process the first signal $\Psi_j[s_j(n)]$ and the second signal $\Psi_j[s_j'(n)]$ for generating the first amplitude value $a_j(n)$ according to the formula (4) reported below

$$a_j(n) \cong \frac{2 \cdot \Psi_j\left[s_j(n)\right]}{\sqrt{\Psi_j\left[s_j(n+1) - s_j(n-1)\right]}}$$

The processing means 11 are moreover able to

- process the second filtered digital signal ($s_f(n)$) to obtain the derivative signal,

$$s'_f(n) = \frac{s_f(n+1) - s_f(n-1)}{2}$$

- apply the non-linear Teager-Kaiser function $\Psi$ to the second filtered digital signal $s_f(n)$ for generating the first signal $\Psi_f[s_f(n)]$ representative of the energy content of the second filtered digital signal $s_f(n)$,

- apply the non-linear Teager-Kaiser function $\Psi$ to the derivative signal $s_f'(n)$ for generating the second signal $\Psi_f[s_f'(n)]$ representative of the energy content of the derivative signal $s_f'(n)$, and

- process the first signal $\Psi_f[s_f(n)]$ and the second signal $\Psi_f[s_f'(n)]$ for generating the second amplitude value $a_f(n)$ according to the formula (5) reported below

$$a(n) \cong \frac{2 \cdot \Psi_f\left[s_f(n)\right]}{\sqrt{\Psi_f\left[s_f(n+1) - s_f(n-1)\right]}}$$

Advantageously, the comparator means 12 are able to compare the value $\kappa(n)$ of the calculated ratio $\dfrac{a(n)}{a_j(n)}$ with the predetermined threshold value $\kappa_{th}(n)$, the control means 15 are able to control the generator means 13 to increase, by a predetermined quantity, the second filtering bandwidth value $f_f$, if the ratio value $\kappa(n)$ calculated by the comparator means 12 is less than or equal to the threshold value $\kappa_{th}(n)$, and the control means 15 are able to control the processing means 11 and the comparator means 12 to compare the value $\kappa(n)$ of the calculated ratio

$$\frac{a(n)}{a_i(n)}$$ with the predetermined threshold value $\kappa_{th}(n)$, until the respective calculated ratio value $\kappa(n)$ is less than or equal to the threshold value $\kappa_{th}(n)$, such that each second filtering bandwidth value $f_f$ represents a filtering bandwidth value able to reduce/suppress the adjacent channel interference in the modulated digital signal (s(n)).

The apparatus 10, particularly the processing means 11, are able to provide the greatest second filtering bandwidth value $f_f$ for which the ratio value $\kappa(n)$ calculated by the comparator means 12 is less than the threshold value $\kappa_{th}(n)$, when the current ratio value $\kappa(n)$ calculated by the comparator means is greater than or equal to the threshold value $\kappa_{th}(n)$. Such greatest second filtering bandwidth value $f_f$ representing the optimal filtering bandwidth value able to reduce/suppress the adjacent channel interference in the modulated digital signal s(n).

In order to reduce or suppress the adjacent channel interference in the received modulated digital signal s(n), the apparatus 10 comprises band-pass filtering means centred on the predetermined channel angular frequency value $\Omega_c$ and having passband value equal to the greatest second filtering bandwidth filtering value $f_f$ supplied by the apparatus 10.

The aforesaid filtering means are able to filter the analog signal s(t) of FM type for generating, through the analog-digital converter means 101, an FM filtered digital signal substantially free of adjacent channel interference.

It should be pointed out that, advantageously, the aforesaid filtering means are the same filtering means 14.

In the case of a modulated digital signal s(n) of AM type received on the predetermined channel angular frequency value $\Omega_c$ for the AM signal, the AM digital signal is composed of a modulating signal and a carrier signal oscillating at the carrier angular frequency $\hat{\Omega}_c$ and is represented by a series of samples.

In this case, the processing means 11 are able to generate the angular frequency value of the carrier signal.

In particular, the processing means 11 are able to receive the predetermined channel angular frequency value $\Omega_c$ and for generating the carrier angular frequency value $\hat{\Omega}_c$ of the carrier signal, and the comparator means 12 are able to calculate the ratio $\dfrac{\hat{\Omega}_c}{\Omega_c}$ between the carrier angular frequency value $\hat{\Omega}_c$ generated by the processing means 11 and the channel angular frequency value $\Omega_c$ received by the processing means 11.

Advantageously, the apparatus 10 is able to provide an optimal filtering bandwidth value able to reduce/suppress the adjacent channel interference in the modulated digital signal s(n), as a function of the ratio $\dfrac{\hat{\Omega}_c}{\Omega_c}$ calculated by the comparator means 12.

In order to reduce or suppress the adjacent channel interference in the received modulated digital signal s(n), the apparatus 10 has the band-pass filtering means 14 centred on the predetermined channel angular frequency value $\Omega_c$ and having passband values equal to the optimal filtering bandwidth value supplied by the apparatus 10. In this case, the filtering means are able to filter the analog signal s(t) of AM type so for generating, through the analog-digital conversion means 101, a filtered AM digital signal substantially free of adjacent channel interference.

It should be indicated that the comparison means 12, the generation means 13, the filtering means 14 and the control means 15 can be implemented through circuitry hardware or a sequence of logic instructions or software.

The present invention also refers to a receiver 100 for receiving an analog radio frequency signal s(t) and comprising analog-digital converter means, for example means 101, able to receive the analog signal s(t) in input to convert the analog signal s(t) into a digital signal s(n), the digital signal s(n) being a modulated digital signal affected by adjacent channel interference.

The receiver 100 advantageously comprises the apparatus 10 for detecting the adjacent channel interference in the modulated digital signal s(n).

In order to reduce or suppress the adjacent channel interference in the received modulated digital signal s(n), the receiver 100 comprises the band-pass filtering means 14 centred on the predetermined channel angular frequency value $\Omega_c$ and having passband value equal to the optimal filtering bandwidth value supplied by the apparatus 10.

Advantageously, the receiver 100 comprises a digital signal processor device or DSP in which the following are incorporated: the processing means 11, the comparison means 12, the generation means 13, the filtering means 14 and the control means 15. In this case, the processing means 11, the comparison means 12, the generation means 13, the filtering means 14 and the control means 15 are advantageously made through a sequence of logic instructions implemented due to the logic present in the DSP.

The receiver 100 can also be inserted in a portable multimedia device (not illustrated in the figures) which comprises a central unit and a plurality of circuits, said central unit being able to control the operation of said plurality of circuits, and said plurality of circuits comprising at least one interface chosen from the group comprising a video interface, a keyboard interface, a communication interface, a pen input interface, an audio interface or a combination of these.

The portable multimedia device moreover comprises at least one antenna (not illustrated) able to receive the analog radio frequency signal s(t), and the receiver 100 according the above-described invention has a signal input coupled to the respective antenna so to receive the analog radio frequency signal s(t).

For example, the portable multimedia device described above can be a cellular telephone equipped with a digital media player, of MP3 player and/or MP4 player type and/or WMV player Digital type.

According to a further aspect, the invention regards a computer product which is directly loadable into the memory of a numerical processor device, comprising program code portions which can achieve the method of the invention when made to run on the processor device.

As can be appreciated from that described above, the method and apparatus according to the invention permit satisfying the needs as stated in the introductive part of the present description and to overcome the drawbacks of the methods and apparatuses of the prior art.

In particular, due to the use of the method and apparatus according to the invention, the hardware circuitry necessary for detecting and suppressing the adjacent channel interference in a modulated digital signal is drastically reduced. In particular, the method and the apparatus as well as the receiver according to the invention do not require the use of costly devices such as mixers and external filters for the intermediate frequency.

Of course, a man skilled in the art, in order to satisfy continent and specific needs, can make numerous modifications and variants to the method and apparatus according to the invention described above, all moreover contained within the protective scope of the invention as defined by the following claims.

**Claims**

1. Method for detecting adjacent channel interference in a modulated digital signal (s(n)), said method being **characterised in that** it comprises the steps of:

   a) providing at least one first value $a_j(n)$ of a characteristic parameter of said digital signal, representative of said modulated digital signal free of adjacent channel interference,
   b) providing at least one second value a(n) of said characteristic parameter of said digital signal, representative of said modulated digital signal affected by adjacent channel interference, and
   c) comparing said at least one first value with said at least one second value so to detect adjacent channel interference in said modulated digital signal,

   said step b) of providing at least one second value comprises the steps of:

   b1) processing said digital signal to obtain a derivative signal (s'(n)) of said digital signal,
   b2) applying a non-linear Teager-Kaiser function ($\Psi$) to said digital signal for generating a first signal ($\Psi[s(n)]$) representative of the energy content of said digital signal,
   b3) applying said non-linear Teager-Kaiser function to said derivative signal for generating a second signal ($\Psi[s'(n)]$) representative of the energy content of said derivative signal,
   b4) processing said first signal and said second signal for generating said at least one second value,
   said modulated digital signal being an FM signal received on a predetermined channel angular frequency value,
   said FM digital signal being composed of a modulating signal and a carrier signal and being represented by a series of samples, said characteristic parameter being a carrier signal amplitude value,

   **wherein** said comparison step c) comprises the step of calculating the ratio $\left( \dfrac{a(n)}{a_j(n)} \right)$ between said at least one second value and said at least one first value,
   the adjacent channel interference in said FM modulated digital signal being detected when the value of said calculated ratio $\left( \dfrac{a(n)}{a_j(n)} \right)$ is greater than 1.

2. Method in accordance with claim 1, wherein said FM modulated digital signal has a predefined frequency deviation ($f_m$), said method comprising the step of set a first filtering bandwidth value ($f_j$) which is less than the value of said predefined frequency deviation and a second filtering bandwidth value ($f_f$) comprised between said first filtering bandwidth value and said value of the predefined frequency deviation, for generating said and for generating said second value.

3. Method in accordance with claim 1, wherein said FM digital signal is obtained by the analog-digital conversion of a modulated analog signal ($s(t)$),
said step a) comprising the steps of:

> a1) filtering said analog signal, with a filtering angular frequency centred on said predetermined channel angular frequency value and with a passband equal to said first filtering band, for generating a first filtered digital signal ($s_j(n)$) from the analog-digital conversion step,
> a2) carrying out the steps from b1) to b4), substituting said digital signal with said first filtered digital signal, for generating said first value

said step b) comprising the steps of:

> - filtering said analog signal, with a filtering angular frequency centred on said predetermined channel angular frequency value and with a passband equal to said second filtering band, for generating a second filtered digital signal ($s_f(n)$) from the analog-digital conversion step,
> - carrying out the steps from b1) to b4), substituting said digital signal with said second filtered digital signal, for generating said second value

said step c) comprising the step of calculating the value ($\kappa(n)$) of the ratio ( $\dfrac{a(n)}{a_j(n)}$ ) between said second value and said first value.

4. Method in accordance with any one of the claims from 1 to 3, wherein said carrier signal amplitude value is generated by applying the following formula:
in which

$$a(n) \cong \frac{2 \cdot \Psi\left[s(n)\right]}{\sqrt{\Psi\left[s(n+1)-s(n-1)\right]}}$$

$\dfrac{1}{2} \cdot \Psi[s(n+1) - s(n-1)]$ is said second signal.

5. Method in accordance with claim 3 or 4, wherein said comparison step c) comprises the step of comparing the value

($\kappa(n)$) of said calculated ratio ( $\dfrac{a(n)}{a_j(n)}$ ) with a predetermined threshold value ($\kappa_{th}(n)$),

said method comprising the steps of:

> d) increasing, by a predefined quantity, the second filtering bandwidth value, and
> e) recursively repeating the steps b), c) and d) for the respective second increased filtering bandwidth value, until the corresponding calculated ratio value is less than or equal to said threshold value, each second filtering bandwidth value representing a filtering bandwidth value able to reduce/suppress the adjacent channel interference in said modulated digital signal,
> f) obtaining the greatest second filtering bandwidth value for which the calculated ratio value is less than or equal to the threshold value, when the calculated ratio value becomes greater than said threshold value, said greatest second filtering bandwidth value representing an optimal filtering bandwidth value able to reduce/suppress the adjacent channel interference in said modulated digital signal.

6. Method for detecting adjacent channel interference in a modulated digital signal, said method being **characterised in that** it comprises the steps of:

a) providing at least one first value $\Omega_c$ of a characteristic parameter of said digital signal, representative of said modulated digital signal free of adjacent channel interference,
b) providing at least one second value $\hat{\Omega}_c$ of said characteristic parameter of said digital signal, representative of said modulated digital signal affected by adjacent channel interference,
c) comparing said at least one first value with said at least one second value so to detect adjacent channel interference in said modulated digital signal,

said step b) of providing at least one second value comprises the steps of:

b1) processing said digital signal to obtain a derivative signal (s'(n)) of said digital signal,
b2) applying a non-linear Teager-Kaiser function ($\Psi$) to said digital signal for generating a first signal ($\Psi[s(n)]$) representative of the energy content of said digital signal,
b3) applying said non-linear Teager-Kaiser function to said derivative signal for generating a second signal ($\Psi[s'(n)]$) representative of the energy content of said derivative signal,
b4) processing said first signal and said second signal for generating said at least one second value;

said modulated digital signal is an AM signal received on a predetermined channel carrier angular frequency value, said AM digital signal being composed of a modulating signal and a carrier signal oscillating at a channel carrier angular frequency and being represented by a series of samples, said characteristic parameter being a channel carrier angular frequency value,

**wherein** said comparison step c) comprises the step of calculating the ratio $(\dfrac{\hat{\Omega}_c}{\Omega_c})$ between said at least one second value and said at least one first value, the adjacent channel interference in said modulated AM digital signal being detected when the value of said calculated ratio is greater or less than 1.

7. Method in accordance with claim 6, wherein
said step a) comprises the step of receiving said predetermined channel carrier angular frequency value ($\Omega_c$), said step b) generates the value of said channel carrier angular frequency ($\hat{\Omega}_c$) of the modulated digital signal (s(n)),

said step c) comprises the step of calculating the ratio $(\dfrac{\hat{\Omega}_c}{\Omega_c})$ between said generated channel carrier angular

frequency value ($\hat{\Omega}_c$) and said received channel carrier angular frequency value ($\Omega_c$).

8. Method in accordance with claim 7, wherein said channel carrier angular frequency value ($\hat{\Omega}_c$) of the AM modulated digital signal (s(n)) is generated by applying the following formula:
in which

$$\hat{\Omega}_c \cong \frac{1}{2} \cdot \arccos\left(1 - \frac{\Psi\big[s(n+1) - s(n-1)\big]}{2 \cdot \Psi\big[s(n)\big]}\right)$$

$\Psi[s(n+1)-s(n-1)]$ is said second signal ($\Psi[s'(n)]$).

9. Method in accordance with any one of the claims from 6 to 8, wherein said method comprises a step of obtaining an optimal filtering bandwidth value able to reduce/suppress the adjacent channel interference in said AM modulated digital signal, as a function of the result of said comparison step c).

10. Apparatus (10) for detecting the adjacent channel interference in a modulated digital signal (s(n)), said apparatus (10) comprising

- processing means (11) able to

- receive said digital signal in input,
- provide at least one first value $a_j(n)$ of a characteristic parameter of said digital signal, representative of said modulated digital signal free of adjacent channel interference,
- provide at least one second value $a(n)$ of said characteristic parameter of said digital signal, representative of said modulated digital signal affected by adjacent channel interference,

- comparator means (12) coupled to said processing means (11) said comparator means is for calculating the ratio between said at least one second value and said at least one first value, the adjacent channel interference in said FM modulated digital signal being detected when the value of said calculated ratio is greater than 1

said processing means (11) are able to

- process said digital signal to obtain a derivative signal $(s'(n))$ of said digital signal,
- apply a non-linear Teager-Kaiser function $(\Psi)$ to said digital signal for generating a first signal $(\Psi[s(n)])$ representative of the energy content of said digital signal,
- apply said non-linear Teager-Kaiser function to said derivative signal for generating a second signal $(\Psi[s'(n)])$ representative of the energy content of said derivative signal,
- process said first signal and said second signal for generating said at least one second value

said modulated digital signal is an FM signal received on a predetermined channel angular frequency value, said FM digital signal being composed of a modulating signal and a carrier signal and being represented by a series of samples, said characteristic parameter being a carrier signal amplitude value

11. Apparatus (10) in accordance with claim 10, wherein said FM modulated digital signal has a predefined frequency deviation $(f_m)$, said apparatus (10) furthermore comprising:

- bandwidth value generator means (13) able to receive the value of said predefined frequency deviation in input, for generating a first filtering bandwidth value $(f_j)$ which is less than the value of said predefined frequency deviation and for generating a second filtering bandwidth value $(f_f)$ comprised between said first filtering bandwidth value and said value of the predefined frequency deviation.

12. Apparatus (10) in accordance with claim 11, comprising:

- analog-digital conversion means (101) able to receive a modulated analog signal $(s(t))$ for converting said modulated analog signal into said FM modulated digital signal,
- band-pass filtering means (14) coupled to said conversion means (101), said band-pass filtering means being centred on said predetermined channel angular frequency value and having a passband,
- control means (15) coupled to said generator means (13) to set said first filtering bandwidth value and said second filtering bandwidth value to the value of said passband of said band-pass filtering means,

said band-pass filtering means being able to filter said analog signal and being coupled to said analog-digital conversion means for generating a first filtered digital signal $(s_j(n))$, when said control means set the value of said passband equal to said first filtering bandwidth value and for generating a second filtered signal $(s_f(n))$, when said control means set the value of said passband equal to said second filtering bandwidth value, said processing means (11) being able to

- process said first filtered digital signal for generating said first value
- process said second filtered digital signal for generating said second value,

said comparator means (12) being able to calculate the value $(\kappa(n))$ of the ratio $\left( \dfrac{a(n)}{a_j(n)} \right)$ between said second value and said first value.

**13.** Apparatus (10) in accordance with claim 12, wherein said processing means (11) are able to

- process said first filtered digital signal and said second filtered digital signal to obtain a respective derivative signal ($s_j'(n), s_f'(n)$),
- apply a non-linear Teager-Kaiser function ($\Psi$) to said first filtered digital signal and said second filtered digital signal for generating a respective first signal ($\Psi_j[s_j(n)]$, $\Psi_f[s_f(n)]$) representative of the energy content of the respective filtered digital signal,
- apply said non-linear Teager-Kaiser function to the respective derivative signal for generating a respective second signal ($\Psi_j[s_j'(n)], \Psi[S_f'(n)]$) representative of the energy content of the respective derivative signal
- process the respective first signal and the respective second signal of said first filtered digital signal and said second filtered digital signal to respectively generate said first amplitude value and said second amplitude value.

**14.** Apparatus (10) in accordance with any one of the claims from 10 to 13, wherein said processing means (11) are able for generating said second value by applying the following formula:

in which

$$a(n) \cong \frac{2 \cdot \Psi\left[s(n)\right]}{\sqrt{\Psi\left[s(n+1)-s(n-1)\right]}}$$

$\dfrac{1}{2} \cdot \Psi[s(n+1) - s(n-1)]$ is said second signal.

**15.** Apparatus (10) in accordance with any one of the claims from 10 to 14, wherein:

- said comparator means (12) are able to compare the value ($\kappa(n)$) of said calculated ratio $(\dfrac{a(n)}{a_j(n)})$ with a predetermined threshold value ($\kappa_{th}(n)$),
- said control means (15) are able to control said generator means (13) to increase, by a predefined quantity, the second filtering bandwidth value ($f_f$), if said ratio value ($\kappa(n)$) calculated by said comparator means (12) is less than or equal to said threshold value ($\kappa_{th}(n)$),
- said control means (15) being able to control said processing means (11) and said comparator means (12) for comparing the value ($\kappa(n)$) of said calculated ratio $(\dfrac{a(n)}{a_j(n)})$ with said predetermined threshold value ($\kappa_{th}(n)$), until the respective calculated ratio value ($\kappa(n)$) is less than or equal to said threshold value ($\kappa_{th}(n)$), each second filtering bandwidth value ($f_f$) representing a filtering angular bandwidth value able to reduce/suppress the adjacent channel interference in said modulated digital signal ($s(n)$),

said apparatus (10) being able to provide the greatest second filtering bandwidth value ($f_f$) for which the ratio value ($\kappa(n)$) calculated by said comparator means (12) is less than the threshold value ($\kappa_{th}(n)$), when the current ratio value ($\kappa(n)$) calculated by said comparator means (12) is greater than or equal to said threshold value ($\kappa_{th}(n)$), said greatest second filtering bandwidth value ($f_f$) representing the optimal filtering bandwidth value able to reduce/suppress the adjacent channel interference in said modulated digital signal ($s(n)$).

**16.** Apparatus (10) for detecting the adjacent channel interference in a modulated digital signal ($s(n)$), said apparatus (10) comprising

- processing means (11) able to
- receive said digital signal in input,
- provide at least one first value $\Omega_c$ of a characteristic parameter of said digital signal, representative of said modulated digital signal free of adjacent channel interference,

- provide at least one second value $\Omega_c$ of said characteristic parameter of said digital signal, representative of said modulated digital signal affected by adjacent channel interference,
- comparator means (12) coupled to said processing means, said comparator means being suitable for calculating the ratio between said at least one second value and said at least one first value, the adjacent channel interference in said FM modulated digital signal being detected when the value of said calculated ratio is greater than 1.
said processing means are able to
- process said digital signal to obtain a derivative signal (s'(n)) of said digital signal,
- apply a non-linear Teager-Kaiser function ($\Psi$) to said digital signal for generating a first signal ($\Psi[s(n)]$) representative of the energy content of said digital signal,
- apply said non-linear Teager-Kaiser function to said derivative signal for generating a second signal ($\Psi[s'(n)]$) representative of the energy content of said derivative signal,
- process said first signal and said second signal for generating said at least one second value,
said modulated digital signal is an AM signal, received on a predetermined channel angular frequency value, said AM digital signal being composed of a modulating signal and a carrier signal and being represented by a series of samples, said characteristic parameter being a channel carrier angular frequency value.

17. Apparatus (10) in accordance with claim 16, wherein said processing means (11) are able to:

- receive said predetermined channel carrier angular frequency value,
- generate the value of said channel carrier angular frequency value of the modulated digital signal, and

said comparator means (12) are able to calculate the ratio between said generated channel carrier angular frequency value and said received channel carrier angular frequency value.

18. Apparatus (10) in accordance with claim 17, wherein said processing means (11) are able to calculate said channel carrier angular frequency value ($\hat{\Omega}_c$) of the modulated digital signal (s(n)) by applying the following formula:

$$\hat{\Omega}_c \cong \frac{1}{2} \cdot \arccos\left(1 - \frac{\Psi[s(n+1) - s(n-1)]}{2 \cdot \Psi[s(n)]}\right)$$

in which $\frac{1}{2} \cdot \Psi[s(n+1) - s(n-1)]$ is said second signal.

19. Apparatus (10) in accordance with claim 18, wherein said apparatus (10) is able to provide an optimal filtering angular bandwidth value able to reduce/suppress the adjacent channel interference in said modulated digital signal (s(n)), as a function of the value of said ratio calculated by said comparator means (12).

20. Apparatus (10) for suppressing the adjacent channel interference in a modulated digital signal (s(n)) received on a predetermined channel angular frequency value ($\Omega_c$), said apparatus (10) being **characterised in that it comprises:**

- an apparatus for detecting the adjacent channel interference in a modulated digital signal (s(n)) in accordance with claims from 10 to 15 or in accordance with any one of the claims from 16 to 19, and
- band- pass filtering means (14) able to receive from said apparatus (10) said optimal filtering bandwidth value, said band- pass filtering means (14) being centred on said predetermined channel angular frequency value ($\Omega_c$) and having angular passband value equal to said optimal filtering angular bandwidth value,

said filtering means (14) being able to filter said analog signal (s(t)) for generating, through analog-digital conversion means (101), a filtered digital signal substantially free of adjacent channel interference.

21. Receiver (100) for receiving an analog radio frequency signal (s(t)), comprising analog-digital converter means (101) able to receive said analog signal (s(t)) in input, to convert said analog signal (s(t)) into a digital signal (s(n)), said digital signal (s(n)) being a modulated digital signal (s(n)) affected by adjacent channel interference, said receiver (100) being **characterised in that it comprises** an apparatus (10) for detecting the adjacent channel interference in said modulated digital signal (s(n)) in accordance with any one of the claims from 10 to 14 or in accordance with any one of the claims from 16 to 19.

22. Receiver (100) in accordance with claim 21, wherein it comprises an apparatus for suppressing the adjacent channel interference in a modulated digital signal (s(n)) received on a predetermined channel angular frequency value ($\Omega_c$) in accordance with claim 20.

23. Portable multimedia device comprising:

   - a central unit and a plurality of circuits, said central unit being able to control the operation of said plurality of circuits, and said plurality of circuits comprising at least one interface chosen from the group comprising a video interface, a keyboard interface, a communication interface, a pen input interface, an audio interface or a combination of these,
   - at least one antenna able to receive an analog radio frequency signal (s(t)),
   - a receiver (100) having at least signal input coupled to said at least one antenna for receiving said analog radio frequency signal (s(t)), said receiver (100) being in accordance with any one of the claims from 21 to 22.

24. Computer product directly loadable in the memory of a numerical processing device, comprising portions of program code which can perform the method in accordance with any one of the claims from 1 to 9 when running on said processor device.

**Patentansprüche**

1. Verfahren zum Detektieren von Nachbarkanalinterferenz in einem modulierten digitalen Signal (s(n)), wobei das Verfahren **dadurch gekennzeichnet ist, daß** es die Schritte umfaßt:

   a) Bereitstellen mindestens eines ersten Wertes $a_j$ (n) eines charakteristischen Parameters des digitalen Signals, der für das modulierte digitale Signal ohne Nachbarkanalinterferenz repräsentativ ist,
   b) Bereitstellen mindestens eines zweiten Wertes a(n) des charakteristischen Parameters des digitalen Signals, der für das modulierte, durch Nachbarkanalinterferenz gestörte digitale Signal repräsentativ ist,
   c) Vergleichen des mindestens einen ersten Wertes mit dem mindestens einen zweiten Wert, um so Nachbarkanalinterferenz in dem modulierten digitalen Signal zu detektieren,

   wobei der Schritt b) des Bereitstellens des mindestens einen zweiten Wertes die Schritte umfaßt:

   b1) Verarbeiten des digitalen Signals, um ein Ableitungssignal (s' (n)) des digitalen Signals zu erhalten,
   b2) Anwenden einer nicht linearen-Teager-Kaiser-Funktion ($\psi$) auf das digitale Signal, um ein erstes Signal ($\psi$ [s(n)]) zu generieren, das für den Energiegehalt des digitalen Signals repräsentativ ist,
   b3) Anwenden der nicht linearen Teager-Kaiser-Funktion auf das Ableitungssignal,
   um ein zweites Signal ($\psi$[s' (n)]) zu generieren, das für den Energiegehalt des Ableitungssignals repräsentativ ist,
   b4) Verarbeiten des ersten Signals und des zweiten Signals, um den wenigstens einen zweiten Wert zu generieren,
   wobei das modulierte digitale Signal ein auf einem vorgegebenen Kanalkreisfrequenzwert empfangenes FM-Signal ist, wobei das digitale FM-Signal sich aus einem modulierenden Signal und einem Trägersignal zusammensetzt und
   durch eine Reihe von Proben dargestellt ist, wobei der charakteristische Parameter ein Trägersignalamplitudenwert ist,

   wobei der Vergleichsschritt c) den Schritt der Berechnung des Verhältnisses $\left( \dfrac{a(n)}{a_j(n)} \right)$ zwischen dem min-

   destens einen zweiten Wert und dem mindestens einen ersten Wert umfaßt, wobei die Nachbarkanalinterferenz in dem FM-modulierten digitalen Signal detektiert wird, wenn der Wert des berechneten Verhältnisses

$$\left( \frac{a(n)}{a_j(n)} \right)$$ größer als 1 ist.

2. Verfahren nach Anspruch 1, wobei das FM-modulierte digitale Signal eine vorgegebene Frequenzabweichung ($f_m$) aufweist, wobei das Verfahren den Schritt des Einstellens eines ersten Wertes (fj) der filternden Bandbreite, der geringer ist als der Wert der vorgegebenen Frequenzabweichung, und eines zweiten Wertes der filternden Bandbreite ($f_f$), der sich zwischen dem ersten Wert der filternden Bandbreite und dem Wert der vorgegebenen Frequenzabweichung befindet, umfaßt, um den Wert zu generieren und um den zweiten Wert zu generieren.

3. Verfahren nach Anspruch 1, wobei das digitale FM-Signal durch die Analog/Digital-Wandlung eines modulierten analogen Signals (s (t)) erhalten wird, wobei der Schritt a) die Schritte umfaßt:

   a1) Filtern des analogen Signals mit einer filternden Kreisfrequenz, deren Mitte auf dem vorgegebenen Kanalkreisfrequenzwert liegt, und mit einem Durchlaßband, das gleich dem ersten filternden Band ist, um ein erstes gefiltertes Digitalsignal ($s_j$ (n)) aus dem Analog/Digital-Wandlungsschritt zu generieren,
   a2) Durchführen der Schritte b1) bis b4), wobei das digitale Signal durch das erste gefilterte digitale Signal substituiert wird, um den ersten Wert zu generieren,

   wobei der Schritt b) die Schritte umfaßt:

   - Filtern des analogen Signals mit einer filternden Kreisfrequenz, deren Mitte auf dem vorgegebenen Kanalkreisfrequenzwert liegt, und mit einem Durchlaßband, das gleich dem zweiten Filterband ist, um ein zweites gefiltertes Digitalsignal ($s_f$(n)) aus dem Analog/Digital-Wandlungsschritt zu generieren,
   - Durchführen der Schritte b1) bis b4), wobei das digitale Signal durch das zweite gefilterte digitale Signal substituiert wird, um den zweiten Wert zu generieren, wobei der Schritt c) den Schritt der Berechnung des Wertes (κ(n)) des Verhältnisses $$\left( \frac{a(n)}{a_j(n)} \right)$$ zwischen dem zweiten und dem ersten Wert umfaßt.

4. Verfahren nach einem der Ansprüche 1 bis 3, wobei der Trägersignalamplitudenwert durch die Anwendung folgender Formel generiert wird:

$$a(n) \cong \frac{2 \cdot \Psi[s(n)]}{\sqrt{\Psi[s(n+1) - s(n-1)]}}$$

bei der $\frac{1}{2} \cdot \Psi[s(n+1) - s(n-1)]$ das zweite Signal ist.

5. Verfahren nach Anspruch 3 oder 4, wobei der Vergleichsschritt c) den Schritt des Vergleichens des Wertes (κ(n))

   des berechneten Verhältnisses $$\left( \frac{a(n)}{a_j(n)} \right)$$ mit dem vorgegebenen Schwellenwert ($\kappa_{th}$ (n)) umfaßt,

   wobei das Verfahren die Schritte umfaßt:

   d) Erhöhen des zweiten Wertes der filternden Bandbreite um eine vorgegebene Menge, und
   e) rekursives Wiederholen der Schritte b), c) und d) für den jeweiligen erhöhten zweiten Wert der filternden Bandbreite, bis der entsprechende berechnete Verhältniswert kleiner als der oder gleich dem Schwellenwert ist, wobei jeder zweite Wert der filternden Bandbreite einen Wert der filternden Bandbreite darstellt, der zum Reduzieren / Unterdrücken der Nachbarkanalinterferenz in dem modulierten digitalen Signal geeignet ist,

f) Erhalten des größten zweiten Wertes der filternden Bandbreite, für den der berechnete Verhältniswert weniger als oder gleich dem Schwellenwert ist, wenn der berechnete Verhältniswert größer wird als der Schwellenwert, wobei der größte zweite Wert der filternden Bandbreite einen optimale Wert der filternden Bandbreite darstellt, der zum Reduzieren / Unterdrücken der Nachbarkanalinterferenz in dem modulierten digitalen Signal geeignet ist.

6. Verfahren zum Detektieren von Nachbarkanalinterferenz in einem modulierten digitalen Signal, wobei das Verfahren **dadurch gekennzeichnet ist, daß** es die Schritte umfaßt:

a) Bereitstellen mindestens eines ersten Wertes $\Omega_c$ eines charakteristischen Parameters des digitalen Signals, der für das modulierte digitale Signal ohne Nachbarkanalinterferenz repräsentativ ist,
b) Bereitstellen mindestens eines zweiten Wertes $\Omega_c$ des charakteristischen Parameters des digitalen Signals, der für das modulierte digitale, durch Nachbarkanalinterferenz gestörte Signal repräsentativ ist,
c) Vergleichen des mindestens einen ersten Wertes mit dem mindestens einen zweiten Wert, um so Nachbarkanalinterferenz in dem modulierten digitalen Signal zu detektieren,

wobei der Schritt b) des Bereitstellens mindestens eines zweiten Wertes die Schritte umfaßt:

b1) Verarbeiten des digitalen Signals, um ein Ableitungssignal (s' (n)) des digitalen Signals zu erhalten,
b2) Anwenden einer nicht-linearen Teager-Kaiser-Funktion ($\psi$) auf das digitale Signal, um ein erstes Signal ($\psi$ [s (n)]) zu generieren, das für den Energiegehalt des digitalen Signals repräsentativ ist,
b3) Anwenden der nicht-linearen Teager-Kaiser-Funktion auf das Ableitungssignal, um ein zweites Signal ($\psi$ [s'(n)]) zu generieren, das für den Energiegehalt des Ableitungssignals repräsentativ ist,
b4) Verarbeiten des ersten Signals und des zweiten Signals, um den wenigstens einen zweiten Wert zu generieren,

wobei das modulierte digitale Signal ein auf einem vorgegebenen Kanalträgerkreisfrequenzwert empfangenes AM-Signal ist, wobei das digitale AM-Signal sich aus einem modulierenden Signal und einem mit einer Kanalträgerkreisfrequenz oszillierenden Trägersignal zusammensetzt und durch eine Reihe von Proben dargestellt ist, wobei der charakteristische Parameter ein Kanalträgerkreisfrequenzwert ist,

wobei der Vergleichsschritt c) den Schritt der Berechnung des Verhältnisses $\left( \dfrac{\hat{\Omega}_c}{\Omega_c} \right)$ zwischen dem mindestens einen zweiten Wert und dem mindestens einen ersten Wert umfaßt, wobei die Nachbarkanalinterferenz in dem modulierten digitalen AM-Signal detektiert wird, wenn der Wert des berechneten Verhältnisses größer oder kleiner als 1 ist.

7. Verfahren nach Anspruch 6, wobei
der Schritt a) den Schritt des Empfangens des vorgegebenen Kanalträgerkreisfrequenzwertes ($\Omega_c$) umfaßt,
der Schritt b) den Kanalträgerkreisfrequenzwert ($\hat{\Omega}_c$) des modulierten digitalen Signals (s(n)) generiert,

wobei der Schritt c) den Schritt der Berechnung des Verhältnisses $\left( \dfrac{\hat{\Omega}_c}{\Omega_c} \right)$ zwischen dem generierten Kanalträ-

gerkreisfrequenzwert ($\hat{\Omega}_c$) und dem empfangenen Kanalträgerkreisfrequenzwert ($\Omega_c$) umfaßt.

8. Verfahren nach Anspruch 7, wobei der Kanalträgerkreisfrequenzwert ($\hat{\Omega}_c$) des AM-modulierten digitalen Signals (s (n)) durch das Anwenden folgender Formel generiert wird:

$$\hat{\Omega}_c \cong \frac{1}{2} \cdot \arccos\left(1 - \frac{\Psi\big[s(n+1) - s(n-1)\big]}{2 \cdot \Psi\big[s(n)\big]}\right)$$

bei der
ψ[s (n+1) - s(n-1)] das zweite Signal (ψ [s' (n)]) ist.

9.  Verfahren nach einem der Ansprüche 6 bis 8, wobei das Verfahren einen Schritt zum Erhalt eines optimalen Wertes der filternden Bandbreite umfaßt, der zum Reduzieren / zum Unterdrücken der Nachbarkanalinterferenz in dem AM-modulierten digitalen Signal als Funktion des Ergebnisses des Vergleichsschrittes c) geeignet ist.

10. Vorrichtung (10) zum Detektieren der Nachbarkanalinterferenz in einem modulierten digitalen Signal (s (n)), wobei die Vorrichtung (10) umfaßt:

    - Verarbeitungsmittel (11), die geeignet sind,

        - zum Empfangen des digitalen Signals im Eingang,
        - zum Bereitstellen mindestens eines ersten Wertes $a_j(n)$ eines charakteristischen Parameters des digitalen Signals, der für das modulierte digitale Signal ohne Nachbarkanalinterferenz repräsentativ ist,

    - zum Bereitstellen mindestens eines zweiten Wertes a(n) des charakteristischen Parameters des digitalen Signals, der für das modulierte digitale, durch Nachbarkanalinterferenz gestörte Signal repräsentativ ist,
    - Vergleichsmittel (12), die mit den Verarbeitungsmitteln (11) gekoppelt sind, wobei die Vergleichsmittel zur Berechnung des Verhältnisses zwischen dem mindestens einen zweiten Wert und dem mindestens einen ersten Wert geeignet sind, wobei die Nachbarkanalinterferenz in dem FM-modulierten digitalen Signal detektiert wird, wenn der Wert des berechneten Verhältnisses größer als 1 ist,
    wobei die Verarbeitungsmittel (11) in der Lage sind,
    - das digitale Signal zu verarbeiten, um ein Ableitungssignal (s' (n)) des digitalen Signals zu erhalten,
    - eine nicht-lineare Teager-Kaiser-Funktion (ψ) auf das digitale Signal anzuwenden, um ein erstes Signal (ψ [s (n)]) zu generieren, das den Energiegehalt des digitalen Signals darstellt,
    - die nicht-lineare Teager-Kaiser-Funktion auf das Ableitungssignal anzuwenden, um ein zweites Signal (ψ [s' (n)]) zu generieren, das den Energiegehalt des Ableitungssignals darstellt,
    - das erste Signal und das zweite Signal zu verarbeiten, um den wenigstens einen zweiten Wert zu generieren, wobei das modulierte digitale Signal ein auf einem vorgegebenen Kanalkreisfrequenzwert empfangenes FM-Signal ist, wobei das digitale FM-Signal sich aus einem modulierenden Signal und einem Trägersignal zusammensetzt und durch eine Reihe von Proben dargestellt ist, wobei der charakteristische Parameter ein Trägersignalamplitudewert ist.

11. Vorrichtung (10) nach Anspruch 10, wobei das FM-modulierte digitale Signal eine vorgegebene Frequenzabweichung ($f_m$) aufweist, wobei die Vorrichtung (10) ferner umfaßt:

    - Mittel (13) zum Generieren von Bandbreitenwerten, die geeignet sind, den Wert der vorgegebenen Frequenzabweichung im Eingang zu empfangen, um einen ersten filternden Bandbreitenwert ($f_j$) zu generieren, der geringer ist als der Wert der vorgegebenen Frequenzabweichung, und um einen zweiten filternden Bandbreitenwert ($f_f$) zu generieren, der sich zwischen dem ersten filternden Bandbreitenwert und dem Wert der vorgegebenen Frequenzabweichung befindet.

12. Vorrichtung (10) nach Anspruch 11, umfassend:

    - Analog/Digital-Wandlungsmittel (101), die zum Empfang eines modulierten analogen Signals (s (t) ) geeignet sind, um das modulierte analoge Signal in das FM-modulierte digitale Signal umzuwandeln,
    - Banddurchlaßfiltermittel (14), die mit den Wandlungsmitteln (101) gekoppelt sind, wobei die Banddurchlaßfiltermittel auf der Mitte des vorgegebenen Kanalkreisfrequenzwertes liegen und ein Durchlaßband aufweisen,
    - Steuerungsmittel (15), die mit den Generierungsmitteln (13) gekoppelt sind, um den ersten filternden Bandbreitenwert und den zweiten filternden Bandbreitenwert auf den Wert des Durchlaßbandes der Banddurchlaßfiltermittel einzustellen,

wobei die Banddurchlaßfiltermittel geeignet sind, das analoge Signal zu filtern und mit dem Analog/Digital-Wandlungsmittel gekoppelt sind, um ein erstes gefiltertes digitales Signal ($s_j$ (n)) zu generieren, wenn die Steuerungsmittel den Wert des Durchlaßbandes gleich dem ersten Wert der filternden Bandbreite einstellen, und um ein zweites gefiltertes Signal ($s_f$ (n)) zu erzeugen, wenn die Steuerungsmittel den Wert des Durchlaßbandes gleich dem zweiten Wert der filternden Bandbreite einstellen,
wobei die Verarbeitungsmittel (11) geeignet sind,
- das erste gefilterte digitale Signal zu verarbeiten, um den ersten Wert zu generieren,
- das zweite gefilterte digitale Signal zu verarbeiten, um den zweiten Wert zu generieren,

wobei die Vergleichsmittel (12) geeignet sind, den Wert ($\kappa$ (n)) des Verhältnisses $\left( \dfrac{a(n)}{a_j(n)} \right)$ zwischen dem

zweiten Wert und dem ersten Wert zu berechnen.

**13.** Vorrichtung (10) nach Anspruch 12, wobei die Verarbeitungsmittel (11) geeignet sind,

- das erste gefilterte digitale Signal und das zweite gefilterte digitale Signal zu verarbeiten, um ein entsprechendes Ableitungssignal (sj' (n), $s_f$' (n)) zu erhalten,
- eine nicht-lineare Teager-Kaiser-Funktion ($\psi$) auf das erste gefilterte digitale Signal und das zweite gefilterte digitale Signal anzuwenden, um ein entsprechendes erstes Signal ($\psi_j$ [$s_j$ (n)], $\psi_f$ [$s_f$ (n)) zu generieren, das den Energiegehalt des entsprechenden gefilterten digitalen Signals darstellt,
- die nicht-lineare Teager-Kaiser-Funktion auf das entsprechende Ableitungssignal anzuwenden, um ein entsprechendes zweites Signal ($\psi_j$ [sj' (n)], $\psi_f$ [$s_f$' (n)]) zu generieren, das den Energiegehalt des entsprechenden Ableitungssignals darstellt,
- das entsprechende erste Signal und das entsprechende zweite Signal des ersten digitalen gefilterten Signals und des zweiten gefilterten digitalen Signals zu verarbeiten, um den ersten Amplitudenwert bzw. den zweiten Amplitudenwert zu generieren.

**14.** Vorrichtung (10) nach einem der Ansprüche 10 bis 13, wobei die Verarbeitungsmittel (11) geeignet sind, den zweiten Wert durch die Anwendung der folgenden Formel zu generieren:

$$a(n) \cong \frac{2 \cdot \Psi[s(n)]}{\sqrt{\Psi[s(n+1) - s(n-1)]}}$$

bei der $\dfrac{1}{2} . \Psi[s(n+1) - s(n-1)]$ das zweite Signal ist.

**15.** Vorrichtung (10) nach einem der Ansprüche 10 bis 14, wobei:

- die Vergleichsmittel (12) geeignet sind, den Wert ($\kappa$ (n) ) des berechneten Verhältnisses $\left( \dfrac{a(n)}{a_j(n)} \right)$ mit einem

vorgegebenen Schwellwert ($\kappa_{th}$ (n)) zu vergleichen,
- die Steuerungsmittel (15) geeignet sind, die Generierungsmittel (13) zu steuern, um den zweiten Wert ($f_f$) der filternden Bandbreite um eine vorgegebene Menge zu erhöhen, wenn der durch die Vergleichsmittel (12) berechnete Verhältniswert ($\kappa$ (n)) kleiner als der oder gleich dem Schwellwert ($\kappa_{th}$ (n)) ist,
- die Steuerungsmittel (15) geeignet sind, die Verarbeitungsmittel (11) und die Vergleichsmittel (12) zum Ver-

gleichen des Wertes ($\kappa$ (n) ) des berechneten Verhältnisses $\left( \dfrac{a(n)}{a_j(n)} \right)$ mit dem vorgegebenen Schwellenwert

($\kappa_{th}$ (n)) zu steuern, bis der entsprechende berechnete Verhältniswert ($\kappa$ (n)) kleiner als der oder gleich dem

Schwellenwert ($\kappa_{th}$ (n)) ist, wobei jeder zweite Wert ($f_f$) der filternden Bandbreite einen Wert der filternden Kreisbandbreite darstellt, der geeignet ist, die Nachbarkanalinterferenz in dem modulierten digitalen Signal (s (n)) zu reduzieren / zu unterdrücken,

wobei die Vorrichtung (10) geeignet ist, den größten zweiten filternden Bandbreitenwert ($f_f$) bereitzustellen, bei dem der durch die Vergleichsmittel (12) berechnete Verhältniswert ($\kappa$ (n)) kleiner ist als der Schwellwert ($\kappa_{th}$ (n)), wenn der durch die Vergleichsmittel (12) berechnete augenblickliche Verhältniswert ($\kappa$ (n) ) größer als der oder gleich dem Schwellenwert ($\kappa_{th}$ (n)) ist, wobei der größte zweite filternde Bandbreitenwert ($f_f$) den optimalen Wert der filternden Bandbreite darstellt, der geeignet ist, die Nachbarkanalinterferenz in dem modulierten digitalen Signal (s (n)) zu reduzieren / zu unterdrücken.

**16.** Vorrichtung (10) zum Detektieren der Nachbarkanalinterferenz in einem modulierten digitalen Signal (s (n)), wobei die Vorrichtung (10) umfaßt:

- Verarbeitungsmittel (11), die geeignet sind,

- zum Empfangen des digitalen Signals im Eingang,
- zum Bereitstellen mindestens eines ersten Wertes $\Omega_c$ eines charakteristischen Parameters des digitalen Signals, der das modulierte digitale Signal ohne Nachbarkanalinterferenz darstellt,
- zum Bereitstellen mindestens eines zweiten Wertes $\hat{\Omega}_c$ des charakteristischen Parameters des digitalen Signals, der das modulierte digitale, durch Nachbarkanalinterferenz gestörte Signal darstellt,

- Vergleichsmittel (12), die mit den Verarbeitungsmitteln gekoppelt sind, wobei die Vergleichsmittel zur Berechnung des Verhältnisses zwischen dem mindestens einen zweiten Wert und dem mindestens einen ersten Wert geeignet sind, wobei die Nachbarkanalinterferenz in dem FM-modulierten digitalen Signal detektiert wird, wenn der Wert des berechneten Verhältnisses größer als 1 ist,

wobei die Verarbeitungsmittel geeignet sind,
- zum Verarbeiten des digitalen Signals, um ein Ableitungssignal (s' (n)) des digitalen Signals zu erhalten,
- zum Anwenden einer nicht-linearen Teager-Kaiser-Funktion ($\psi$) auf das digitale Signal, um ein erstes Signal ($\psi$ [s (n)]) zu generieren, das den Energiegehalt des digitalen Signals darstellt,
- zum Anwenden der nicht-linearen Teager-Kaiser-Funktion auf das Ableitungssignal, um ein zweites Signal ($\psi$ [s' (n)]) zu generieren, das den Energiegehalt des Ableitungssignals darstellt,
- zum Verarbeiten des ersten Signals und des zweiten Signals, um den wenigstens einen zweiten Wert zu generieren,

wobei das modulierte digitale Signal ein auf einem vorgegebenen Kanalträgerkreisfrequenzwert empfangenes AM-Signal ist, wobei das digitale AM-Signal sich aus einem modulierenden Signal und einem Trägersignal zusammensetzt und durch eine Reihe von Proben dargestellt ist, wobei der charakteristische Parameter ein Kanalträgerkreisfrequenzwert ist.

**17.** Vorrichtung (10) nach Anspruch 16,
wobei die Verarbeitungsmittel (11) geeignet sind,

- zum Empfangen des vorgegebenen Kanalträgerkreisfrequenzwertes,
- zum Generieren des Kanalträgerkreisfrequenzwertes des modulierten digitalen Signals,
und wobei die Vergleichsmittel (12) geeignet sind, das Verhältnis zwischen dem generierten Kanalträgerkreisfrequenzwert und dem empfangenen Kanalträgerkreisfrequenzwert zu berechnen.

**18.** Vorrichtung (10) nach Anspruch 17, wobei die Verarbeitungsmittel (11) geeignet sind, den Kanalträgerkreisfrequenzwert ($\hat{\Omega}_c$) des modulierten digitalen Signals (s (n) ) durch das Anwenden folgender Formel zu berechnen:

$$\hat{\Omega}_c \cong \frac{1}{2} \cdot \arccos\left(1 - \frac{\Psi\left[s(n+1) - s(n-1)\right]}{2 \cdot \Psi\left[s(n)\right]}\right)$$

bei der $\frac{1}{2} \cdot \Psi\left[s(n+1) - s(n-1)\right]$ das zweite Signal ist.

**19.** Vorrichtung (10) nach Anspruch 18, wobei die Vorrichtung (10) geeignet ist, einen optimalen Wert der filternden Kreisbandbreite bereitzustellen, der geeignet ist, die Nachbarkanalinterferenz in dem modulierten digitalen Signal (s (n)) als Funktion des Wertes des durch die Vergleichsmittel (12) berechneten Verhältnisses zu reduzieren / zu unterdrücken.

**20.** Vorrichtung (10) zum Unterdrücken der Nachbarkanalinterferenz in einem modulierten, auf einem vorgegebenen Kanalkreisfrequenzwert ($\Omega_c$) empfangenen digitalen Signals (s (n), wobei die Vorrichtung (10) **dadurch gekennzeichnet, daß** sie umfaßt:

- eine Vorrichtung zum Detektieren der Nachbarkanalinterferenz in einem modulierten digitalen Signal (s (n)) nach den Ansprüchen 10 bis 15 oder nach einem der Ansprüche 16 bis 19, und
- Banddurchlaßfiltermittel (14), die geeignet sind, von der Vorrichtung (10) den optimalen Wert der filternden Bandbreite zu empfangen, wobei die Mitte der Banddurchlaßfiltermittel (14) auf dem vorgegebenen Kanalkreisfrequenzwert ($\Omega_c$) liegt und sie einen Kreisdurchlaßbandwert gleich dem optimalen Wert der filternden Kreisbandbreite haben,
wobei die Filtermittel (14) geeignet sind, das analoge Signal (s (t)) zu filtern, um durch Analog/Digital-Wandlungsmittel (101) ein gefiltertes digitales Signal zu generieren, das im Wesentlichen frei von Nachbarkanalinterferenz ist.

**21.** Empfänger (100) zum Empfangen eines analogen Radiofrequenzsignals (s (t)), umfassend Analog/Digital-Wandlungsmittel (101), die zum Empfangen des analogen Signals (s (t)) im Eingang und zum Wandeln des analogen Signals (s ( t)) in ein digitales Signal (s (n)) geeignet sind, wobei das digitale Signal (s (n)) ein moduliertes digitales Signal (s (n)) ist, das durch Nachbarkanalinterferenz gestört ist, wobei der Empfänger (100) **dadurch gekennzeichnet ist, daß** er eine Vorrichtung (10) zum Detektieren der Nachbarkanalinterferenz in dem modulierten digitalen Signal (s (n)) nach einem der Ansprüche 10 bis 14 oder nach einem der Ansprüche 16 bis 19 umfaßt.

**22.** Empfänger (100) nach Anspruch 21, wobei er eine Vorrichtung gemäß Anspruch 20 zum Unterdrücken der Nachbarkanalinterferenz in einem modulierten digitalen Signal (s (n)) umfaßt, das auf einem vorgegebenen Kanalkreisfrequenzwert ($\Omega_c$) empfangen wird.

**23.** Tragbares Multimedia-Gerät umfassend:

- eine Zentraleinheit und eine Vielzahl von Schaltungen, wobei die Zentraleinheit zur Steuerung des Betriebs der Vielzahl von Schaltungen geeignet ist und die Vielzahl von Schaltungen mindestens eine Schnittstelle umfaßt, ausgewählt aus der Gruppe umfassend eine Video-Schnittstelle, eine Tastatur-Schnittstelle, eine Kommunikations-Schnittstelle, ein Stift-Eingabe-Schnittstelle, eine Audio-Schnittstelle oder eine Kombination daraus,
- mindestens eine Antenne, die zum Empfangen eines analogen Radiofrequenzsignals (s (t)) geeignet ist,
- ein Empfänger (100), bei dem mindestens ein Signaleingang mit der zumindest einen Antenne zum Empfang des analogen Radiofrequenzsignals (s (t)) gekoppelt ist, wobei der Empfänger (100) einem der Ansprüche 21 bis 22 entspricht.

**24.** Computerprodukt, das direkt in den Speicher einer numerischen Verarbeitungseinrichtung ladbar ist, umfassend Programmcodeteile, die geeignet sind, das Verfahren nach einem der Ansprüche 1 bis 9 zu verwirklichen, wenn sie auf der Verarbeitungseinrichtung laufen.

**Revendications**

**1.** Procédé de détection de brouillage par le canal adjacent dans un signal numérique modulé (s(n)), ledit procédé étant **caractérisé par le fait qu'**il comprend les étapes consistant :

a) à fournir au moins une première valeur $a_j$ (n) d'un paramètre caractéristique du signal numérique, qui est représentative du signal numérique modulé exempt de brouillage par le canal adjacent,

b) à fournir au moins une deuxième valeur a (n) du paramètre caractéristique dudit signal numérique, qui est représentative dudit signal numérique modulé affecté par le brouillage par le canal adjacent,

c) à comparer ladite au moins une première valeur à ladite au moins une deuxième valeur de manière à détecter du brouillage par le canal adjacent dans le signal numérique modulé,

ladite étape b) consistant à fournir ladite au moins une deuxième valeur comprenant les étapes consistant :

b1) à traiter ledit signal numérique afin d'obtenir un signal dérivé (s' (n)) dudit signal numérique,

b2) à appliquer une fonction non linéaire de Teager-Kaiser ($\psi$) audit signal numérique afin de générer un premier signal ($\psi[s(n)]$) qui est représentatif du contenu énergétique dudit signal numérique,

b3) à appliquer ladite fonction non linéaire de Teager-Kaiser au signal dérivé afin de générer un deuxième signal ($\psi[s' (n)]$) qui est représentatif du contenu énergétique du signal dérivé,

b4) à traiter ledit premier signal et ledit deuxième signal afin de générer ladite au moins une deuxième valeur,

ledit signal numérique modulé étant un signal FM reçu sur une valeur prédéterminée de fréquence angulaire de canal, ledit signal FM numérique se composant d'un signal modulant et d'un signal porteur et étant représenté par une série d'échantillons, ledit paramètre caractéristique étant une valeur d'amplitude de signal porteur,

ladite étape de comparaison c) comprenant l'étape de calcul du rapport $\left( \dfrac{a(n)}{a_j(n)} \right)$ entre ladite au moins une deuxième valeur et ladite au moins une première valeur, le brouillage par le canal adjacent dans le signal numérique modulé FM étant détecté lorsque la valeur du rapport calculé $\left( \dfrac{a(n)}{a_j(n)} \right)$ est supérieure à 1.

2. Procédé selon la revendication 1, dans lequel le signal numérique modulé FM présente une déviation prédéterminée de fréquence ($f_m$), le procédé comprenant l'étape de réglage d'une première valeur de largeur de bande de filtrage ($f_j$) qui est inférieure à la valeur de la déviation prédéterminée de fréquence et d'une deuxième valeur de largeur de bande de filtrage ($f_f$) comprise entre ladite première valeur de largeur de bande de filtrage et la valeur de la déviation prédéterminée de fréquence, pour générer ladite valeur et pour générer ladite deuxième valeur.

3. Procédé selon la revendication 1, dans lequel le signal numérique FM est obtenu par la conversion analogique/numérique d'un signal analogique modulé (s (t)),
   ladite étape a) comprenant les étapes consistant :

   a1) à filtrer ledit signal analogique avec une fréquence angulaire de filtrage centrée sur ladite valeur prédéterminée de fréquence angulaire de canal et avec une bande passante égale à ladite première bande de filtrage afin de générer un premier signal numérique filtré ($s_j$ (n)) à partir de ladite étape de conversion analogique/numérique,

   a2) à mettre en oeuvre les étapes b1) à b4), ledit signal numérique étant substitué par le premier signal numérique filtré afin de générer ladite première valeur,

   ladite étape b) comprenant les étapes consistant :

   - à filtrer le signal analogique avec une fréquence angulaire de filtrage centrée sur ladite valeur prédéterminée de fréquence angulaire de canal et avec une bande passante égale à ladite deuxième bande de filtrage afin de générer un deuxième signal numérique filtré ($s_f$ (n)) à partir de ladite étape de conversion analogique/numérique,

   - à mettre en oeuvre les étapes b1) à b4), ledit signal numérique étant substitué par le deuxième signal numérique filtré afin de générer ladite deuxième valeur, ladite étape c) comprenant l'étape de calcul de la valeur ($\kappa$ (n)) du

rapport $\left(\dfrac{a(n)}{a_j(n)}\right)$ entre ladite deuxième valeur et ladite première valeur.

**4.** Procédé selon l'une quelconque des revendications 1 à 3, dans lequel ladite valeur d'amplitude de signal porteur est générée en appliquant la formule suivante :

$$a(n) \cong \frac{2 \cdot \Psi[s(n)]}{\sqrt{\Psi[s(n+1) - s(n-1)]}}$$

où $\dfrac{1}{2} \cdot \Psi[s(n+1) - s(n-1)]$ est ledit deuxième signal.

**5.** Procédé selon la revendication 3 ou 4, dans lequel ladite étape de comparaison c) comprend l'étape de comparaison

de la valeur ($\kappa$ (n)) du rapport calculé $\left(\dfrac{a(n)}{a_j(n)}\right)$ à la valeur de seuil prédéterminée ($\kappa_{th}$ (n)),

ledit procédé comprenant les étapes consistant :

d) à augmenter, d'une quantité prédéterminée, la deuxième valeur de largeur de bande de filtrage, et
e) à répéter de manière récursive les étapes b), c) et d) pour la deuxième valeur augmentée respective de la largeur de bande de filtrage jusqu'à ce que la valeur de rapport calculée correspondante soit inférieure ou égale à la valeur de seuil, chaque deuxième valeur de la largeur de bande de filtrage représentant une valeur de la largeur de bande de filtrage, qui est apte à réduire/supprimer le brouillage par le canal adjacent dans ledit signal numérique modulé,
f) à obtenir la plus grande deuxième valeur de largeur de bande de filtrage, pour laquelle la valeur de rapport calculée est inférieure ou égale à la valeur de seuil lorsque la valeur de rapport calculée devient plus grande que la valeur de seuil, la plus grande deuxième valeur de largeur de bande de filtrage représentant une valeur optimale de largeur de bande de filtrage qui est apte à réduire/supprimer le brouillage par le canal adjacent dans ledit signal numérique modulé.

**6.** Procédé de détection de brouillage par le canal adjacent dans un signal numérique modulé, ledit procédé étant **caractérisé par le fait qu'**il comprend les étapes consistant :

a) à fournir au moins une première valeur $\Omega_c$ d'un paramètre caractéristique du signal numérique, qui est représentative du signal numérique modulé exempt de brouillage par le canal adjacent,
b) à fournir au moins une deuxième valeur $\hat{\Omega}_c$ du paramètre caractéristique dudit signal numérique, qui est représentative dudit signal numérique modulé affecté par le brouillage par le canal adjacent,
c) à comparer ladite au moins une première valeur à ladite au moins une deuxième valeur de manière à détecter du brouillage par le canal adjacent dans le signal numérique modulé,

ladite étape b) consistant à fournir au moins une deuxième valeur comprenant les étapes consistant :

b1) à traiter ledit signal numérique afin d'obtenir un signal dérivé (s' (n)) dudit signal numérique,
b2) à appliquer une fonction non linéaire de Teager-Kaiser ($\psi$) audit signal numérique afin de générer un premier signal ($\psi$[s(n)]) qui est représentatif du contenu énergétique dudit signal numérique,
b3) à appliquer ladite fonction non linéaire de Teager-Kaiser au signal dérivé afin de générer un deuxième signal ($\psi$[s' (n)]) qui est représentatif du contenu énergétique du signal dérivé,
b4) à traiter ledit premier signal et ledit deuxième signal afin de générer ladite au moins une deuxième valeur,

le signal numérique modulé étant un signal AM reçu sur une valeur prédéterminée de fréquence angulaire porteuse de canal, ledit signal AM numérique se composant d'un signal modulant et d'un signal porteur oscillant à une fréquence angulaire porteuse de canal et étant représenté par une série d'échantillons, ledit paramètre caractéristique étant une valeur de fréquence angulaire porteuse de canal,

ladite étape de comparaison c) comprenant l'étape de calcul du rapport $\left( \dfrac{\hat{\Omega}_c}{\Omega_c} \right)$ entre ladite au moins une deuxième valeur et ladite au moins une première valeur, le brouillage par le canal adjacent dans le signal AM numérique modulé étant détecté lorsque la valeur du rapport calculé est supérieure ou inférieure à 1.

**7.** Procédé selon la revendication 6, dans lequel
ladite étape a) comprend l'étape de réception de la valeur prédéterminée de fréquence angulaire porteuse de canal ($\Omega_c$),
ladite étape b) génère la valeur de la fréquence angulaire porteuse de canal ($\hat{\Omega}_c$) dudit signal numérique modulé (s (n)),

l'étape c) comprenant l'étape de calcul du rapport $\left( \dfrac{\hat{\Omega}_c}{\Omega_c} \right)$ entre la valeur générée de fréquence angulaire porteuse de canal ($\hat{\Omega}_c$) et la valeur reçue de fréquence angulaire porteuse de canal ($\Omega_c$).

**8.** Procédé selon la revendication 7, dans lequel la valeur de fréquence angulaire porteuse de canal ($\hat{\Omega}_c$) du signal numérique modulé AM (s(n)) est générée en appliquant la formule suivante :

$$\hat{\Omega}_c \cong \frac{1}{2} \cdot \arccos\left( 1 - \frac{\Psi[s(n+1) - s(n-1)]}{2 \cdot \Psi[s(n)]} \right)$$

où
$\psi$[s (n+1) - s(n-1)] est le deuxième signal ($\psi$ [s' (n)]).

**9.** Procédé selon l'une quelconque des revendications 6 à 8, ledit procédé comprenant une étape d'obtention d'une valeur optimale de largeur de bande de filtrage apte à réduire/supprimer le brouillage par le canal adjacent dans ledit signal numérique modulé AM, comme une fonction du résultat de ladite étape de comparaison c).

**10.** Dispositif (10) de détection du brouillage par le canal adjacent dans un signal numérique modulé (s(n)), ledit dispositif (10) comprenant :

    - des moyens de traitement (11) aptes

        - à recevoir ledit signal numérique en entrée,
        - à fournir au moins une première valeur $a_j$ (n) d'un paramètre caractéristique du signal numérique, qui est représentative du signal numérique modulé exempt de brouillage par le canal adjacent,

    - à fournir au moins une deuxième valeur a (n) du paramètre caractéristique dudit signal numérique, qui est représentative dudit signal numérique modulé affecté par le brouillage par le canal adjacent,
    - des moyens de comparaison (12) couplés auxdits moyens de traitement (11), lesdits moyens de comparaison étant aptes à calculer le rapport entre ladite au moins une deuxième valeur et ladite au moins une première valeur, le brouillage par le canal adjacent dans le signal numérique modulé FM étant détecté lorsque la valeur du rapport calculé est supérieure à 1,
les moyens de traitement (11) étant aptes
    - à traiter ledit signal numérique afin d'obtenir un signal dérivé (s' (n)) dudit signal numérique,
    - à appliquer une fonction non linéaire de Teager-Kaiser ($\psi$) audit signal numérique afin de générer un premier

signal ($\psi[s(n)]$) qui est représentatif du contenu énergétique dudit signal numérique,
- à appliquer ladite fonction non linéaire de Teager-Kaiser au signal dérivé afin de générer un deuxième signal ($\psi[s'(n)]$) qui est représentatif du contenu énergétique du signal dérivé,
- à traiter ledit premier signal et ledit deuxième signal afin de générer ladite au moins une deuxième valeur,
ledit signal numérique modulé étant un signal FM reçu sur une valeur prédéterminée de fréquence angulaire de canal, ledit signal FM numérique se composant d'un signal modulant et d'un signal porteur et étant représenté par une série d'échantillons, ledit paramètre caractéristique étant une valeur d'amplitude de signal porteur.

**11.** Dispositif (10) selon la revendication 10, dans lequel ledit signal numérique modulé FM présente une déviation prédéterminée de fréquence ($f_m$), ledit dispositif (10) comprenant en outre :

- des moyens (13) de génération de valeurs de largeur de bande aptes à recevoir en entrée la valeur de ladite déviation prédéterminée de fréquence afin de générer une première valeur de largeur de bande de filtrage ($f_j$) qui est inférieure à la valeur de la déviation prédéterminée de fréquence et afin de générer une deuxième valeur de largeur de bande de filtrage ($f_f$) comprise entre ladite première valeur de largeur de bande de filtrage et la valeur de la déviation prédéterminée de fréquence.

**12.** Dispositif (10) selon la revendication 11, comprenant:

- des moyens convertisseurs analogique/numérique (101) aptes à recevoir un signal analogique modulé ($s(t)$) afin de convertir ledit signal analogique modulé en ledit signal numérique modulé FM,
- des moyens de filtrage passe-bande (14) couplés auxdits moyens convertisseurs (101), lesdits moyens de filtrage passe-bande étant centrés sur ladite valeur prédéterminée de fréquence angulaire de canal et présentant une bande passante,
- des moyens de commande (15) couplés aux moyens de génération (13) afin de régler la première valeur de largeur de bande de filtrage et ladite deuxième valeur de largeur de bande de filtrage à la valeur de la bande passante des moyens de filtrage passe-bande,
lesdits moyens de filtrage passe-bande étant aptes à filtrer le signal analogique et étant couplés aux moyens convertisseurs analogique/numérique afin de générer un premier signal numérique filtré ($s_j(n)$) lorsque les moyens de commande règlent la valeur de la bande passante de manière à être égale à la première valeur de largeur de bande de filtrage, et pour générer un deuxième signal filtré ($s_f(n)$) lorsque les moyens de commande règlent la valeur de la bande passante de manière à être égale à la deuxième valeur de largeur de bande de filtrage,
lesdits moyens de traitement (11) étant aptes
- à traiter ledit premier signal numérique filtré afin de générer ladite première valeur,
- à traiter ledit deuxième signal numérique filtré afin de générer ladite deuxième valeur,

lesdits moyens de comparaison (12) étant aptes à calculer la valeur ($\kappa(n)$) du rapport $\left( \dfrac{a(n)}{a_j(n)} \right)$ entre la deuxième valeur et la première valeur.

**13.** Dispositif (10) selon la revendication 12, lesdits moyens de traitement (11) étant aptes

- à traiter ledit premier signal numérique filtré et ledit deuxième signal numérique filtré pour obtenir un signal dérivé respectif ($s_j'(n)$, $s_f'(n)$),
- à appliquer une fonction non linéaire de Teager-Kaiser ($\psi$) audit premier signal numérique filtré et audit deuxième signal numérique filtré afin de générer un premier signal respectif ($\psi_j[s_j(n)]$, $\psi_f[s_f(n)$) qui est représentatif du contenu énergétique du signal numérique filtré respectif,
- à appliquer ladite fonction non linéaire de Teager-Kaiser au signal dérivé respectif pour générer un deuxième signal respectif ($\psi_j[s_j'(n)]$, $\psi_f[s_f'(n)]$) qui est représentatif du contenu énergétique du signal dérivé respectif,
- à traiter le premier signal respectif et le deuxième signal respectif du premier signal numérique filtré et du deuxième signal numérique filtré afin de générer la première valeur d'amplitude et la deuxième valeur d'amplitude respectivement.

**14.** Dispositif (10) selon l'une quelconque des revendications 10 à 13, dans lequel les moyens de traitement (11) sont aptes à générer la deuxième valeur en appliquant la formule suivante:

$$a(n) \cong \frac{2 \cdot \Psi[s(n)]}{\sqrt{\Psi[s(n+1)-s(n-1)]}}$$

où $\frac{1}{2}.\Psi[s(n+1)-s(n-1)]$ est le deuxième signal.

**15.** Dispositif (10) selon l'une quelconque des revendications 10 à 14, dans lequel : - les moyens de comparaison (12) sont aptes à comparer la valeur ($\kappa$ (n)) du rapport calculé $\left(\dfrac{a(n)}{a_j(n)}\right)$ à une valeur de seuil prédéterminée ($\kappa_{th}$ (n)),

- les moyens de commande (15) sont aptes à commander lesdits moyens de génération (13) afin d'augmenter, d'une quantité prédéterminée, la deuxième valeur de largeur de bande de filtrage ($f_f$) si la valeur de rapport ($\kappa$ (n)) calculée par les moyens de comparaison (12) est inférieure ou égale à la valeur de seuil ($\kappa_{th}$ (n)),
- lesdits moyens de commande (15) sont aptes à commander les moyens de traitement (11) et les moyens de comparaison (12) destinés à comparer la valeur ($\kappa$ (n) ) du rapport calculé $\left(\dfrac{a(n)}{a_j(n)}\right)$ à la valeur de seuil prédéterminée ($\kappa_{th}$ (n)), jusqu'à ce que la valeur de rapport calculée respective ($\kappa$ (n)) soit inférieure ou égale à la valeur de seuil ($\kappa_{th}$ (n)), chaque deuxième valeur de largeur de bande de filtrage ($f_f$) représentant une valeur de largeur de bande angulaire de filtrage, qui est apte à réduire/supprimer le brouillage par le canal adjacent dans ledit signal numérique modulé (s (n)),
ledit dispositif (10) étant apte à fournir la plus grande deuxième valeur de largeur de bande de filtrage ($f_f$) pour laquelle la valeur de rapport ($\kappa$ (n)) calculée par lesdits moyens de comparaison (12) est inférieure à la valeur de seuil ($\kappa_{th}$ (n)) lorsque la valeur de rapport courant ($\kappa$ (n) ) calculée par lesdits moyens de comparaison (12) est supérieure ou égale à ladite valeur de seuil ($\kappa_{th}$ (n)), la plus grande deuxième valeur de largeur de bande de filtrage ($f_f$) représentant la valeur optimale de largeur de bande de filtrage, qui est apte à réduire/supprimer le brouillage par le canal adjacent dans ledit signal numérique modulé (s (n)).

**16.** Dispositif (10) de détection du brouillage par le canal adjacent dans un signal numérique modulé (s(n)), ledit dispositif (10) comprenant :

- des moyens de traitement (11) aptes

- à recevoir ledit signal numérique en entrée,
- à fournir au moins une première valeur $\Omega_c$ d'un paramètre caractéristique du signal numérique, qui est représentative du signal numérique modulé exempt de brouillage par le canal adjacent,

- à fournir au moins une deuxième valeur $\hat{\Omega}_c$ du paramètre caractéristique dudit signal numérique, qui est représentative dudit signal numérique modulé affecté par le brouillage par le canal adjacent,
- des moyens de comparaison (12) couplés auxdits moyens de traitement (11), lesdits moyens de comparaison étant aptes à calculer le rapport entre ladite au moins une deuxième valeur et ladite au moins une première valeur, le brouillage par le canal adjacent dans le signal numérique modulé FM étant détecté lorsque la valeur du rapport calculé est supérieure à 1,
les moyens de traitement étant aptes
- à traiter ledit signal numérique afin d'obtenir un signal dérivé (s' (n)) dudit signal numérique,
- à appliquer une fonction non linéaire de Teager-Kaiser ($\psi$) audit signal numérique afin de générer un premier signal ($\psi[s(n)]$) qui est représentatif du contenu énergétique dudit signal numérique,
- à appliquer ladite fonction non linéaire de Teager-Kaiser au signal dérivé afin de générer un deuxième signal ($\psi[s'$ (n)$]$) qui est représentatif du contenu énergétique du signal dérivé,

- à traiter ledit premier signal et ledit deuxième signal afin de générer ladite au moins une deuxième valeur, ledit signal numérique modulé étant un signal AM reçu sur une valeur prédéterminée de fréquence angulaire porteuse de canal, ledit signal AM numérique se composant d'un signal modulant et d'un signal porteur et étant représenté par une série d'échantillons, ledit paramètre caractéristique étant une valeur de fréquence angulaire porteuse de canal.

**17.** Dispositif (10) selon la revendication 16, dans lequel les moyens de traitement (11) sont aptes

- à recevoir ladite valeur prédéterminée de fréquence angulaire porteuse de canal,
- à générer la valeur de fréquence angulaire porteuse de canal du signal numérique modulé,
et dans lequel lesdits moyens de comparaison (12) sont aptes à calculer le rapport entre ladite valeur générée de fréquence angulaire porteuse de canal et ladite valeur reçue de fréquence angulaire porteuse de canal.

**18.** Dispositif (10) selon la revendication 17, dans lequel lesdits moyens de traitement (11) sont aptes à calculer la valeur de fréquence angulaire porteuse de canal ($\Omega_c$) du signal numérique modulé (s (n)) en appliquant la formule suivante :

$$\hat{\Omega}_c \cong \frac{1}{2} \cdot \arccos\left(1 - \frac{\Psi[s(n+1) - s(n-1)]}{2 \cdot \Psi[s(n)]}\right)$$

où $\frac{1}{2} \cdot \Psi[s(n+1) - s(n-1)]$ est ledit deuxième signal.

**19.** Dispositif (10) selon la revendication 18, le dispositif (10) étant apte à fournir une valeur optimale de largeur de bande angulaire de filtrage apte à réduire/supprimer le brouillage par le canal adjacent dans ledit signal numérique modulé (s (n)), comme une fonction de la valeur dudit rapport calculé par les moyens de comparaison (12).

**20.** Dispositif (10) de suppression du brouillage par le canal adjacent dans un signal numérique modulé (s (n)) reçu sur une valeur prédéterminée de fréquence angulaire de canal ($\Omega_c$), ledit dispositif (10) étant **caractérisé en ce qu'**il comprend :

- un dispositif de détection du brouillage par le canal adjacent dans un signal numérique modulé (s (n)) selon les revendications 10 à 15 ou selon l'une quelconque des revendications 16 à 19, et
- des moyens de filtrage passe-bande (14) aptes à recevoir de la part du dispositif (10) ladite valeur optimale de largeur de bande de filtrage, lesdits moyens de filtrage passe-bande (14) étant centrés sur ladite valeur prédéterminée de fréquence angulaire de canal ($\Omega_c$) et présentant une valeur de bande passante angulaire égale à la valeur optimale de largeur de bande angulaire de filtrage, lesdits moyens de filtrage (14) étant aptes à filtrer le signal analogique (s (t)) pour générer, par l'intermédiaire de moyens convertisseurs analogique/numérique (101), un signal numérique filtré qui est pour l'essentiel exempt de brouillage par le canal adjacent.

**21.** Récepteur (100) pour recevoir un signal radiofréquence analogique (s(t)), comprenant des moyens convertisseurs analogique/numérique (101) aptes à recevoir en entrée ledit signal analogique (s(t)) et à convertir ledit signal analogique (s(t)) en un signal numérique (s (n)), ledit signal numérique (s (n)) étant un signal numérique modulé (s (n)) affecté par le brouillage par le canal adjacent, ledit récepteur (100) étant **caractérisé en ce qu'**il comprend un dispositif (10) de détection du brouillage par le canal adjacent dans le signal numérique modulé (s (n)) selon l'une quelconque des revendications 10 à 14 ou selon l'une quelconque des revendications 16 à 19.

**22.** Récepteur (100) selon la revendication 21, comprenant un dispositif de suppression du brouillage par le canal adjacent dans un signal numérique modulé (s (n)) reçu sur une valeur prédéterminée de fréquence angulaire de canal ($\Omega_c$), selon la revendication 20.

**23.** Dispositif multimédia portable comprenant:

- une unité centrale et une pluralité de circuits, ladite unité centrale étant apte à commander le fonctionnement de la pluralité de circuits et ladite pluralité de circuits comprenant au moins une interface choisie dans le groupe comprenant une interface vidéo, une interface clavier, une interface de communication, une interface de saisie par stylo, une interface audio ou une combinaison de ceux-ci,
- au moins une antenne apte à recevoir un signal radiofréquence analogique (s (t)),
- un récepteur (100) dans lequel au moins une entrée de signal est couplée à ladite au moins une antenne de réception du signal radiofréquence analogique (s (t)), ledit récepteur (100) étant selon l'une quelconque des revendications 21 à 22.

**24.** Produit informatique qui peut être chargé directement dans la mémoire d'un dispositif de traitement numérique, comprenant des portions de code de programme qui peuvent mettre en oeuvre le procédé selon l'une quelconque des revendications 1 à 9 lorsqu'elles sont exécutées sur ledit dispositif de traitement.

s(t)

ADC — 101

s(n)

d

s'(n)    s(n)

$\Psi$

$\Psi[s'(n)]$    $\Psi[s(n)]$

$a(n), a_j(n)$

a(n)    $a_j(n)$

$K(n) = \dfrac{a(n)}{a_j(n)}$

K(n)

K(n)>1 →NO→ NO ADJACENT CHANNEL INTERFERENCE

SI

ADJACENT CHANNEL INTERFERENCE

## FIG.1

$s(t)$

ADC,$f_f$ — 101

$s(n)$

$d$

$s'(n)$

$s(n)$

$\Psi$

$\Psi[s'(n)]$

$\Psi[s(n)]$

$\hat{\Omega}_c$

$\hat{\Omega}_c \neq \Omega_c$

NO → NO ADJACENT CHANNEL INTERFERENCE

SI

ERROR $\pm \triangle f_{AM}$ → OPTIMAL BAND VALUE $f_f$

## FIG.2

EP 1 909 400 B1

FIG.3

FIG.4

EP 1 909 400 B1

FIG.5

**EP 1 909 400 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6430724 B
- US 20030207669 A
- WO 2004047322 A
- WO 03039012 A

**Non-patent literature cited in the description**

- **JAMES F. KAISER.** On a Simple Algorithm to Calculate the Energy of a Signal. *PROC. ICASSP,* 1990, vol. S7.3, 381-384